# EUROPEAN PATENT APPLICATION

(11) **EP 4 394 708 A1**
(43) Date of publication of application: **03.07.2024**
(21) Application number: 22874794.5
(22) Date of filing: 23.09.2022
(51) Int. Cl.: G06T 9/00

(54) **FEATURE MAP PROCESSING METHOD AND RELATED DEVICE**

(30) Priority: 29.09.2021 CN 202111149140
(71) Applicant: Huawei Technologies Co., Ltd., Shenzhen, Guangdong 518129 (CN)
(72) Inventor: YU, Dequan, Shenzhen, Guangdong 518129 (CN); ZHAO, Yin, Shenzhen, Guangdong 518129 (CN); YANG, Haitao, Shenzhen, Guangdong 518129 (CN)
(74) Representative: Gill Jennings & Every LLP
(86) International application number: PCT/CN2022/120937
(87) International publication number: WO 2023/051408

(57) **Abstract**

This application provides a feature map processing method and a related device, and relates to the field of artificial intelligence technologies. The method includes: determining P target strides based on a preset correspondence between a stride and a feature map size range and a size of a target feature map, where P is any positive integer; and invoking a neural network model to process the target feature map, to obtain a processing result of the target feature map, where the neural network model includes P dynamic stride modules. In a process of invoking the neural network model to process the target feature map, a stride of any dynamic stride module of the P dynamic stride modules is a target stride corresponding to the any dynamic stride module in the P target strides. In embodiments of this application, under a given computing power, a feature domain task network can adapt to input feature maps of different sizes.

## Description

This application claims priority to Chinese Patent Application No. 202111149140.1, filed with the China National Intellectual Property Administration on September 29, 2021, and entitled "FEATURE MAP PROCESSING METHOD AND RELATED DEVICE", which is incorporated herein by reference in its entirety.

### TECHNICAL FIELD

Embodiments of this application relate to the field of artificial intelligence (AI) technologies, and in particular, to a feature map processing method and a related device.

### BACKGROUND

Most neural networks of an existing machine task are a visual task neural network (briefly referred to as an image domain task network) that uses an image as an input. That is, an input into the image domain task network is an image. After processing the input image, the image domain task network outputs a processing result. When the image domain task network is combined with video or image encoding and decoding application, a decoder side (for example, an image decoder based on an artificial neural network) needs to parse a bitstream to generate a reconstructed feature map, the reconstructed feature map is then input into an image reconstruction network to generate a reconstructed image, and the reconstructed image is used as an input into the image domain task network. Therefore, when the image domain task network is combined with video or image encoding and decoding application, a large computing power is required.

Therefore, a visual task neural network (briefly referred to as a feature domain task network) that uses a feature map as an input is used to replace the image domain task network, so as to reduce a computing power for a machine task in combination with video or image encoding and decoding application. For example, a reconstructed feature map generated by parsing a bitstream is used as an input into the feature domain task network, so that an image reconstruction process is omitted. This reduces a computing power. However, how to enable the feature domain task network to adapt to input feature maps of different sizes (also referred to as resolutions) under a given computing power is still an unsolved technical problem.

### SUMMARY

This application provides a feature map processing method and a related device, to enable a feature domain task network to adapt to input feature maps of different sizes under a given computing power.

The foregoing and other objects are achieved by the subject matter of the independent claims. Further implementation forms are apparent from the dependent claims, the description and the figures.

Particular embodiments are outlined in the attached independent claims, with other embodiments in the dependent claims.

According to a first aspect, this application relates to a feature map processing method. The method includes: determining P target strides based on a preset correspondence between a stride and a feature map size range and a size of a target feature map, where P is any positive integer; and invoking a neural network model to process the target feature map, to obtain a processing result of the target feature map, where the neural network model includes P dynamic stride modules, the P dynamic stride modules correspond to the P target strides, and in a process of invoking the neural network model to process the target feature map, a stride of any dynamic stride module of the P dynamic stride modules is a target stride corresponding to the any dynamic stride module in the P target strides.

In this embodiment of this application, the neural network model includes the P dynamic stride modules. Specifically, a backbone network of the neural network model includes the P dynamic stride modules. Determining the preset correspondence between the stride and the feature map size range in a training phase of the neural network model is determining a correspondence between a stride of each of the P dynamic stride modules and an input feature map size range. In an inference phase of the neural network model, the stride of each of the P dynamic stride modules is first obtained based on the size of the target feature map and the preset correspondence between the stride and the feature map size range. Then, the strides of the P dynamic stride modules are configured as the foregoing determined strides. Then, the target feature map is input into the neural network model for processing, and the processing result of the target feature map is obtained. The dynamic stride module may perform down-sampling on the feature map. If a feature map size range to which an input feature map belongs is different, a corresponding stride of the dynamic stride module is also different, and a down-sampling rate of the dynamic stride module is also different. Therefore, when a size of the input feature map is large, an appropriate stride of the dynamic stride module may be selected based on the size of the input feature map, that is, an appropriate down-sampling rate is selected. Therefore, compared with a calculation amount for processing a small-sized input feature map, the calculation amount is not increased when the neural network model processes the large-sized input feature map. In addition, for the neural network model, when the size range to which the input feature map belongs is different, only the stride of the dynamic stride module changes, but a model parameter (namely, a weight parameter) of the dynamic stride module does not change. Therefore, for input feature maps of different sizes, the model parameters of the neural network model are the same. A parameter of the neural network model is fixed in a training process. In a process of obtaining the neural network model through training, a training sample is appropriately selected, so that the training sample includes a sample feature map of each size range. In this way, the neural network model obtained through training adapts to an input feature map of each size range, and precision can be ensured. In this way, in this application, no additional network structure is introduced, and no model parameter is added, so that the feature domain task network can dynamically adapt to input feature maps of different sizes without increasing a calculation amount. That is, the network can work well in a large input size range while taking into account network operation efficiency, a model size, and precision.

In a possible design, the target feature map is a feature map obtained by decoding a bitstream.

In this design, the target feature map input into the neural network model is the feature map obtained by decoding the bitstream. For example, the target feature map is a feature map obtained by decoding a feature map bitstream by using an entropy decoding module of an end-to-end image decoder. In this way, for video or image encoding and decoding, there is no need to perform image reconstruction on the feature map obtained by decoding the bitstream to obtain a reconstructed image and input the reconstructed image into the neural network model for processing. That is, a process of image reconstruction may be omitted. The feature map obtained by decoding the bitstream is directly input into the neural network model for analysis. This reduces a computing power.

In a possible design, the dynamic stride module is a dynamic stride convolutional layer or a dynamic stride residual block.

In this design, the convolutional layer or the residual block performs down-sampling on the feature map. Therefore, the dynamic stride module may be the dynamic stride convolutional layer or the dynamic stride residual block. For a different size of an input feature map, an appropriate stride of the dynamic stride convolutional layer or the dynamic stride residual block is determined. When the neural network model is invoked to process the input feature map, the determined stride is used as the stride of the dynamic stride convolutional layer or the dynamic stride residual block. Therefore, under a given computing power, the neural network model can adapt to input feature maps of different sizes.

In a possible design, the method further includes: determining the preset correspondence between the stride and the feature map size range, where the preset correspondence between the stride and the feature map size range includes a correspondence between N groups of strides and N feature map size ranges, and N is any positive integer; obtaining M groups of sample feature maps, where any group of sample feature maps in the M groups of sample feature maps includes a feature map in any feature map size range of the N feature map size ranges, and M is any positive integer; and performing multiple times of iterative training on a neural network based on the M groups of sample feature maps to obtain the neural network model, where the neural network model includes the P dynamic stride modules. In a process of training the neural network based on any sample feature map, the P dynamic stride modules correspond to P training strides, the stride of the any dynamic stride module of the P dynamic stride modules is a training stride corresponding to the any dynamic stride module in the P training strides, the P training strides are P training strides corresponding to the any sample feature map, and the P training strides corresponding to the any sample feature map are determined from the N groups of strides based on the correspondences between the N groups of strides and the N feature map size ranges and a size of the any sample feature map.

In this design, the determining the preset correspondence between the stride and the feature map size range in a training phase of the neural network model specifically includes setting the correspondences between the N groups of strides and the N feature map size ranges, where a value of N may be determined based on an actual requirement. For any input sample feature map, if a size of the input sample feature map belongs to one of the N feature map size ranges, a group of strides corresponding to the input sample feature map is a group of strides corresponding to the feature map size range to which the input sample feature map belongs. Because the neural network model includes the P dynamic stride modules, the group of strides corresponding to the any sample feature map includes the P training strides. During training, the strides of the P dynamic stride modules are configured as the P training strides in a one-to-one correspondence. In this way, for sample feature maps of different feature map size ranges, the strides of the dynamic stride modules in the neural network during training are different. When the training sample is selected, the M groups of sample feature maps may be selected, where a value of M may be determined based on an actual requirement. Any group of sample feature maps in the M groups of sample feature maps includes feature maps in the foregoing N feature map size ranges. In this way, the sample feature maps in the feature map size ranges are balanced during training. In conclusion, in this application, the neural network is trained by using the sample feature maps in the different feature map size ranges at the corresponding strides, and quantities of the sample feature maps in the different feature map size ranges are balanced. This helps improve precision of processing the input feature maps of different sizes by the neural network model.

In a possible design, the performing multiple times of iterative training on a neural network based on the M groups of sample feature maps to obtain the neural network model includes: S1: performing step S11 to step S13 for a first group of sample feature maps, where the first group of sample feature maps is any group of sample feature maps in the M groups of sample feature maps: S11: inputting a first sample feature map in the first group of sample feature maps into the neural network to obtain a first loss; S12: if the first loss converges, obtaining the neural network model, or if the first loss does not converge, adjusting a parameter of the neural network based on the first loss, and performing step S13; and S13: continuing to perform the foregoing steps S11 and S12 by using any second sample feature map that is not used for training in the first group of sample feature maps as the first sample feature map, and if the first loss still does not converge after all sample feature maps in the first group of sample feature maps are used for training, performing step S2; and S2: continuing to perform the foregoing step S1 by using any second group of sample feature maps that is not used for training in the M groups of sample feature maps as the first group of sample feature maps.

In this design, a group of sample feature maps includes sample feature maps in N feature map size ranges. In each iterative training process, a sample feature map in one of the N feature map size ranges in the group of sample feature maps is input into the neural network, one calculation of a first loss is performed, and the first loss is transmitted back to adjust a parameter of the neural network. After all sample feature maps in the group of sample feature maps are used for training, another group of sample feature maps is used. For the another group of sample feature maps, a sample feature map in one of the N feature map size ranges is also input into the neural network each time, and a first loss is calculated once until the first loss converges, so that the neural network model is obtained. In this way, in each iterative training in this design, sample feature maps of different feature map size ranges are input into the neural network. This helps the neural network model maintain good precision for input feature maps of different sizes.

In a possible design, the performing multiple times of iterative training on a neural network based on the M groups of sample feature maps to obtain the neural network model includes: S1: performing step S11 to step S13 for a first group of sample feature maps, where the first group of sample feature maps is any group of sample feature maps in the M groups of sample feature maps: S11: inputting the first group of sample feature maps into the neural network to obtain N first losses, where the N first losses correspond to the N feature map size ranges; S12: obtaining a second loss through calculation based on the N first losses; and S13: if the second loss converges, obtaining the neural network model, or if the second loss does not converge, adjusting a parameter of the neural network based on the second loss, and performing step S2; and S2: continuing to perform the foregoing step S 1 by using any second group of sample feature maps that is not used for training in the M groups of sample feature maps as the first group of sample feature maps.

In this design, a group of sample feature maps includes sample feature maps in N feature map size ranges. In each iterative training process, sample feature maps in the N feature map size ranges in the group of sample feature maps are separately input into the neural network, and one calculation of a first loss is performed on the sample feature map in each feature map size range to obtain N first losses. Then, a second loss is obtained through calculation based on the N first losses. For example, summation, weighted summation, averaging, weighted averaging, or the like is performed on the N first losses to obtain the second loss. Then, the second loss is transmitted back to adjust a parameter of the neural network. When a group of sample feature maps is used for training, another group of sample feature maps is used. For the another group of sample feature maps, sample feature maps in N feature map size ranges are also separately input into the neural network, and one calculation of a first loss is performed on the sample feature map in each feature map size range to obtain N first losses. A second loss is obtained through calculation based on the N first losses until the second loss converges, so that the neural network model is obtained. In this way, in each iterative training in this design, the sample feature maps input into the neural network include sample feature maps of different feature map size ranges. This helps the neural network model maintain good precision for input feature maps of different sizes.

In a possible design, the any group of sample feature maps in the M groups of sample feature maps includes N sample feature maps, the N sample feature maps are obtained by encoding N first sample images, the N first sample images are obtained by resizing a second sample image, the N first sample images include images in N image size ranges, and the N image size ranges correspond to the N feature map size ranges.

In this design, the second sample images are resized to the different image size ranges to obtain the N first sample images. Then, an encoder separately encodes the N first sample images to obtain the N sample feature maps, where the N sample feature maps are in a one-to-one correspondence with the N first sample images. The N first sample images include the images in the N image size ranges, and the N image size ranges are in a one-to-one correspondence with the N feature map size ranges. Therefore, the N sample feature maps obtained by encoding the N first sample images include the sample feature maps in the N feature map size ranges. In this way, the N sample feature maps have the same content but only different sizes. The N sample feature maps are used to train the neural network. That is, the neural network is trained in a multi-size and aligned data joint training manner. Compared with a single-size or multi-size and non-aligned data training manner for training a neural network, this manner better improves precision of the neural network model obtained through training.

In a possible design, the obtaining M groups of sample feature maps includes: obtaining M second sample images; and performing the following operations for each second sample image in the M second sample images to obtain the M groups of sample feature maps, where the M groups of sample feature maps correspond to the M second sample images: resizing a second sample image F to obtain N first sample images, where the second sample image F is any one of the M second sample images, the N first sample images include images in N image size ranges, and the N image size ranges correspond to the N feature map size ranges; and separately inputting the N first sample images to the encoder to obtain N sample feature maps included in a group of sample feature maps corresponding to the second sample image F, where the M groups of sample feature maps include the group of sample feature maps corresponding to the second sample image F.

In this way, the N sample feature maps in any group of the obtained M groups of sample feature maps have the same content but only different sizes. The N sample feature maps are used to train the neural network. That is, the neural network is trained in a multi-size and aligned data joint training manner. Compared with a single-size or multi-size and non-aligned data training manner for training a neural network, this manner better improves precision of the neural network model obtained through training.

According to a second aspect, this application relates to a feature map processing apparatus. For beneficial effects, refer to the description of the first aspect. Details are not described herein again. The feature map processing apparatus has a function of implementing behavior in the method example of the first aspect. The function may be implemented by hardware, or may be implemented by hardware executing corresponding software. The hardware or the software includes one or more modules corresponding to the foregoing function. In a possible design, the feature map processing apparatus includes: a processing unit, configured to determine P target strides based on a preset correspondence between a stride and a feature map size range and a size of a target feature map, where P is any positive integer; and invoke a neural network model to process the target feature map, to obtain a processing result of the target feature map, where the neural network model includes P dynamic stride modules, and the P dynamic stride modules correspond to the P target strides. In a process of invoking the neural network model to process the target feature map, a stride of any dynamic stride module of the P dynamic stride modules is a target stride corresponding to the any dynamic stride module in the P target strides.

In a possible design, the target feature map is a feature map obtained by decoding a bitstream.

In a possible design, the dynamic stride module is a dynamic stride convolutional layer or a dynamic stride residual block.

In a possible design, the processing unit is further configured to: determine the preset correspondence between the stride and the feature map size range, where the preset correspondence between the stride and the feature map size range includes a correspondence between N groups of strides and N feature map size ranges, and N is any positive integer; obtain M groups of sample feature maps, where any group of sample feature maps in the M groups of sample feature maps includes N sample feature maps, the N sample feature maps include a feature map in any feature map size range of the N feature map size ranges, and M is any positive integer; and perform multiple times of iterative training on a neural network based on the M groups of sample feature maps to obtain the neural network model, where the neural network model includes the P dynamic stride modules. In a process of training the neural network based on any sample feature map, the P dynamic stride modules correspond to P training strides, the stride of the any dynamic stride module of the P dynamic stride modules is a training stride corresponding to the any dynamic stride module in the P training strides, the P training strides are P training strides corresponding to the any sample feature map, and the P training strides corresponding to the any sample feature map are determined from the N groups of strides based on the correspondences between the N groups of strides and the N feature map size ranges and a size of the any sample feature map.

In a possible design, the processing unit is specifically configured to: S1: perform step S11 to step S13 for a first group of sample feature maps, where the first group of sample feature maps is any group of sample feature maps in the M groups of sample feature maps: S11: inputting a first sample feature map in the first group of sample feature maps into the neural network to obtain a first loss; S12: if the first loss converges, obtaining the neural network model, or if the first loss does not converge, adjusting a parameter of the neural network based on the first loss, and performing step S13; and S 13: continuing to perform the foregoing steps S11 and S12 by using any second sample feature map that is not used for training in the first group of sample feature maps as the first sample feature map, and if the first loss still does not converge after all sample feature maps in the first group of sample feature maps are used for training, performing step S2; and S2: continue to perform the foregoing step S1 by using any second group of sample feature maps that is not used for training in the M groups of sample feature maps as the first group of sample feature maps.

In a possible design, the processing unit is specifically configured to: S1: perform step S11 to step S13 for a first group of sample feature maps, where the first group of sample feature maps is any group of sample feature maps in the M groups of sample feature maps: S11: inputting the first group of sample feature maps into the neural network to obtain N first losses, where the N first losses correspond to the N feature map size ranges; S12: obtaining a second loss through calculation based on the N first losses; and S 13: if the second loss converges, obtaining the neural network model, or if the second loss does not converge, adjusting a parameter of the neural network based on the second loss, and performing step S2; and S2: continue to perform the foregoing step S1 by using any second group of sample feature maps that is not used for training in the M groups of sample feature maps as the first group of sample feature maps.

In a possible design, the any group of sample feature maps in the M groups of sample feature maps includes N sample feature maps, the N sample feature maps are obtained by encoding N first sample images, the N first sample images are obtained by resizing a second sample image, the N first sample images include images in N image size ranges, and the N image size ranges correspond to the N feature map size ranges.

In a possible design, the processing unit is specifically configured to: obtain M second sample images; and perform the following operations for each second sample image in the M second sample images to obtain the M groups of sample feature maps, where the M groups of sample feature maps correspond to the M second sample images: resizing a second sample image F to obtain N first sample images, where the second sample image F is any one of the M second sample images, the N first sample images include images in N image size ranges, and the N image size ranges correspond to the N feature map size ranges; and separately inputting the N first sample images to the encoder to obtain N sample feature maps included in a group of sample feature maps corresponding to the second sample image F, where the M groups of sample feature maps include the group of sample feature maps corresponding to the second sample image F.

According to a third aspect, this application relates to an electronic device, including: one or more processors; and a non-transitory computer-readable storage medium, coupled to the processor and storing a program executed by the processor. When the program is executed by the processor, the electronic device is enabled to perform the method according to any possible embodiment of the first aspect.

According to a fourth aspect, this application relates to a non-transitory computer-readable storage medium, including program code. When the program code is executed by a computer device, the method according to any possible embodiment of the first aspect is performed.

According to a fifth aspect, this application relates to a computer program product including program code. When the program code is run, the method according to any possible embodiment of the first aspect is performed.

According to a sixth aspect, this application relates to a chip, including: a processor, configured to invoke a computer program from a memory and run the computer program, so that a device in which the chip is mounted performs the method according to any possible embodiment of the first aspect.

Details of one or more embodiments are set forth in the accompanying drawings and the description below. Other features, objects, and advantages will be apparent from the description, drawings, and claims.

### BRIEF DESCRIPTION OF DRAWINGS

The following describes accompanying drawings used in embodiments of this application.
FIG. 1 is a schematic diagram of an image codec based on an artificial neural network;
FIG. 2 is a schematic flowchart of an image domain analysis task;
FIG. 3 is a schematic flowchart of a feature domain analysis task;
FIG. 4 is a schematic diagram of a structure of a dynamic stride network according to an embodiment of this application;
FIG. 5 is a schematic diagram of a structure of a dynamic stride convolutional neural network according to an embodiment of this application;
FIG. 6 is a schematic diagram of a structure of a dynamic stride convolutional neural network based on a dynamic stride residual block according to an embodiment of this application;
FIG. 7 is a schematic diagram of a first example structure of the dynamic stride convolutional neural network shown in FIG. 6;
FIG. 8 is a schematic diagram of a second example structure of the dynamic stride convolutional neural network shown in FIG. 6;
FIG. 9 is a schematic diagram of a third example structure of the dynamic stride convolutional neural network shown in FIG. 6;
FIG. 10 is a schematic diagram of a fourth example structure of the dynamic stride convolutional neural network shown in FIG. 6;
FIG. 11 is a schematic diagram of a fifth example structure of the dynamic stride convolutional neural network shown in FIG. 6;
FIG. 12 is a schematic diagram of a sixth example structure of the dynamic stride convolutional neural network shown in FIG. 6;
FIG. 13 is a schematic flowchart of a feature map processing method according to an embodiment of this application;
FIG. 14 is a schematic diagram of a neural network training procedure according to an embodiment of this application;
FIG. 15 is a schematic diagram of another neural network training procedure according to an embodiment of this application;
FIG. 16 is a schematic diagram of a structure of a feature map processing apparatus according to an embodiment of this application; and
FIG. 17 is a schematic diagram of a structure of an electronic device according to an embodiment of this application.

### DESCRIPTION OF EMBODIMENTS

First, some technical knowledge in embodiments of this application is described, so that a person skilled in the art can understand this application.

### (1) Convolutional neural network

The convolutional neural network (Convolutional Neural Network, CNN) is a typical method in the field of image processing and analysis. The convolutional neural network includes at least a convolutional layer, and may further include other functional modules such as an activation layer, a pooling layer (Pooling Layer), a batch normalization layer (Batch Normalization Layer, BN layer for short), and a fully connected layer (Fully Connected Layer, FC layer for short). The activation layer may be a rectified linear unit (Rectified Linear Unit, ReLU), a parametric rectified linear unit (Parametric Rectified Linear Unit, PReLU), or the like. Typical convolutional neural networks include LeNet, AlexNet, VGGNet, ResNet, Yolo, Faster RCNN, Mask RCNN, ASLFeat, and the like. A basic convolutional neural network, for example, AlexNet in object recognition (Object Recognition), may include a backbone network (Backbone Network) and a head network (Head Network). Some complex CNNs, such as Faster RCNN with a feature pyramid structure in a target detection field, include a backbone network, a neck network (Neck Network), and a head network.

The backbone network is a first part of the convolutional neural network, and functions to extract feature maps of multiple scales from an input image. The backbone network generally includes a convolutional layer, a pooling layer, an activation layer, and the like, and does not include a fully connected layer. Generally, a resolution (width and height) of a feature map output by a layer close to the input image in the backbone network is large, but a quantity of channels is small. Typical backbone networks include VGG-16, ResNet-50, ResNeXt-101, and the like. The backbone network can be divided into two parts: a front part of the backbone network and a core part of the backbone network. The front part of the backbone network is several layers close to the input in the backbone network, and is also referred to as a stem (stem). The front part generally includes a small quantity of convolutional layers, and may further include layers of other forms such as a pooling layer. The front part preliminarily processes an input signal, to reduce a spatial resolution and increase a quantity of channels. For example, an input side in Resnet-50 is a structure formed by a convolutional layer with a 7×7 convolution kernel and a maximum pooling layer (Max Pool). A part other than the front part of the backbone network is the core part of the backbone network. The core part of the backbone network generally includes a large quantity of convolutional layers and some network submodules that are connected in series and that have same or similar structures, for example, a residual block (Residual Block, ResBlock for short) in Resnet.

The neck network is a middle part of the convolutional neural network, and functions to further integrate and process the feature maps generated by the backbone network to obtain a new feature map. A common neck network is, for example, a feature pyramid network (Feature Pyramid Network, FPN).

The head network is a last part of the convolutional neural network, and functions to process the feature map to obtain a prediction result output by the neural network. A common head network includes a fully connected layer, a normalized exponential function (Softmax) module, and the like.

A bottleneck structure (Bottleneck Structure) is a multi-layer network structure. Input data of the network first passes through one or more neural network layers to obtain intermediate data, and then the intermediate data passes through one or more neural network layers to obtain output data. A data amount (for example, a product of a width, a height, and a quantity of channels) of the intermediate data is less than an input data amount and an output data amount.

The feature map is three-dimensional data output by layers such as the convolutional layer, the activation layer, the pooling layer, and the batch normalization layer in the convolutional neural network. Three dimensions of the feature map are respectively referred to as a width (Width), a height (Height), and a channel (Channel).

The neural network needs to determine parameters of each layer of the neural network through training. In a training process, forward loss calculation and back gradient propagation are applied to update trainable parameters in the neural network. Through multiple parameter updates, the parameters of each layer of the neural network finally converge to better analysis precision. After the training is completed, the parameters of each layer of the network are usually fixed, and the input signal passes through the neural network to obtain the result. This process of actually using the neural network is referred to as "inference".

Stride (stride): When a convolution kernel is moved, starting from the upper left corner of the input, one output is obtained through calculation each time the convolution kernel is moved by one column left or one row down. A quantity of rows or columns by which the convolution kernel is moved is referred to as the stride. The convolutional layer may include a plurality of convolution operators. The convolution operator is also referred to as a kernel. During image processing, the convolution operator functions as a filter that extracts specific information from an input image matrix. The convolution operator may essentially be a weight matrix, and the weight matrix is usually predefined. In a process of performing a convolution operation on an image, the weight matrix usually processes pixels s by s in a horizontal direction on the input image, where s is the stride.

### (2) Image codec based on an artificial neural network

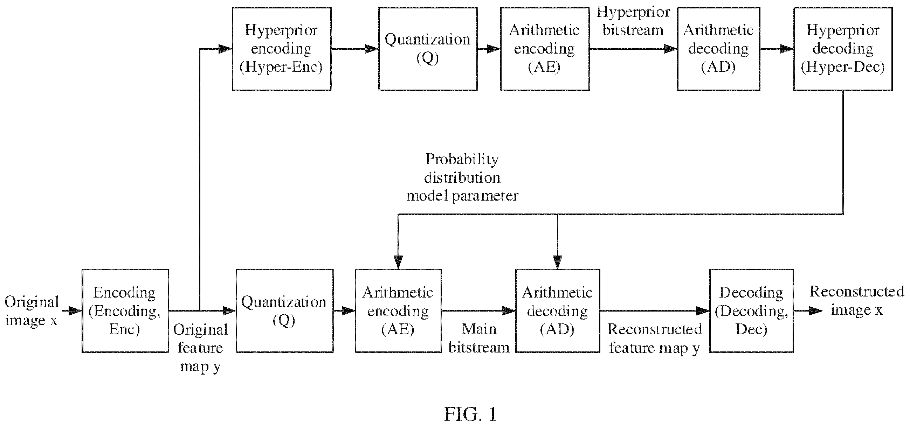

Since 2017, the image codec based on an artificial neural network has developed rapidly from an early autoencoder (Autoencoder) structure and a recurrent neural network (Recurrent Neural Network, RNN) structure to a variational autoencoder (Variational Autoencoder, VAE) structure with higher performance, and has compression performance comparable to that of H.266/VCC (Versatile Video Coding, multi-purpose video coding). A typical network model is shown in FIG. 1.

At an encoder side, an original image x is input into a feature extraction module, that is, input into an encoding (Encoding, Enc) module, to output an original feature map y. A hyperprior encoding (Hyper-Enc) module performs feature extraction on the original feature map y to output prior information ẑ. The prior information ẑ is quantized to obtain quantized ẑ. The quantized ẑ is input into a probability estimation module to output a probability distribution model parameter of each feature element ẑ[x][y][i], so that a probability distribution of each feature element ẑ[x][y][i] is obtained. An entropy encoding or arithmetic encoding (AE) module performs arithmetic encoding on each feature element based on the probability distribution to obtain a hyperprior bitstream. The entropy decoding or arithmetic decoding (AD) module performs entropy decoding on the hyperprior bitstream to obtain a value of the feature element ẑ[x][y][i]. A hyperprior decoding (Hyper-Dec) module performs image reconstruction to output a reconstructed image of the feature map y (namely, a reconstructed feature map y). In addition, the original feature map y is input into a quantization module to obtain a quantized feature map ŷ. The entropy encoding module obtains a probability distribution of each feature element ŷ[x][y][i] based on a probability distribution model parameter obtained by the hyperprior decoding module, and performs entropy encoding on each feature element ŷ[x][y][i] in the quantized feature map ŷ based on the probability distribution to obtain an encoded bitstream.

At a decoder side, the decoder side parses the bitstream, and outputs a probability distribution of a to-be-encoded symbol ŷ based on the probability distribution model parameter transmitted by the hyperprior decoding module. The entropy decoding module performs arithmetic decoding on each feature element ŷ[x][y][i] in the quantized feature map ŷ based on the probability distribution of each feature element ŷ[x][y][i] to obtain a value of the feature element ŷ[x][y][i]. The feature map ŷ is input into an image reconstruction module to output a reconstructed map.

In addition, a probability estimation module of some variational autoencoders (Variational Auto Encoders, VAEs) further uses a decoded feature element around a current feature element, to more accurately estimate a probability distribution of the current feature element.

### (3) Feature domain image analysis

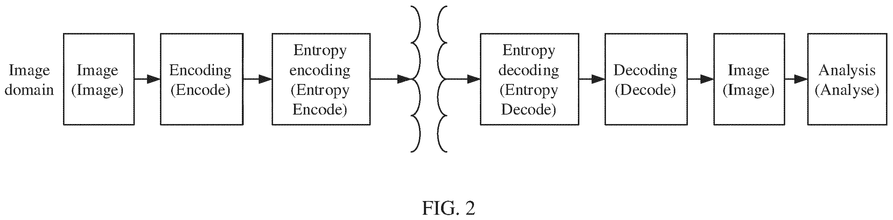

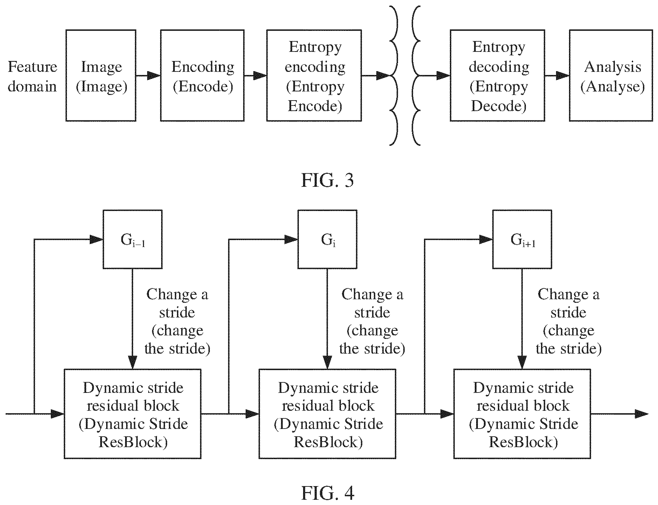

In daily life, an image, a video, or the like stored and transmitted in an electronic device is information compressed and encoded by an encoder. As shown in FIG. 2, when an image is analyzed in an image domain, the compressed and encoded information stored in the device needs to be decoded and restored into an image, and then analysis is performed. In the field of AI image or video encoding and decoding, a large calculation amount is required in a decoding process, and severely affects image analysis efficiency. However, as shown in FIG. 3, when an image is analyzed in a feature domain, the compressed and encoded information does not need to be restored into an image by using a decoder, and the compressed and encoded information is directly used as an input to analyze an image. This greatly improves a speed of an image analysis task.

### (4) Feature domain task network

Neural networks of an existing machine task are a visual task neural network (briefly referred to as an image domain task network) that uses an image as an input. An input into the image domain task network is an image. After processing the input image, the image domain task network outputs a processing result. The image domain task network is, for example, Resnet, Faster-RCNN, Mask-RCNN, Yolo, and the like. When the image domain task network is combined with video or image encoding and decoding application, a decoder (for example, an image decoder based on an artificial neural network) needs to parse a bitstream to generate a reconstructed feature map, the reconstructed feature map is then input into an image reconstruction network to generate a reconstructed image, and the reconstructed image is used as an input into the image domain task network.

This application proposes a feature map domain visual task neural network (briefly referred to as a feature domain task network) that uses a feature map (obtained based on an artificial neural network codec) as an input. The network has the advantages that an image decoding network is skipped, a reconstructed feature map generated by parsing a bitstream is used as an input, and a visual task is directly performed, so that a computing power can be remarkably reduced. For example, a classification task and a segmentation task are used as an example. When a same loss function is used, classification precision of a network (for example, cResnet) that uses a feature map restored by the decoder as an input may be close to (or slightly less than) classification precision of a network (for example, Resnet) that uses an image restored by the decoder as an input. A feature map whose size is W/8×h/8×C is generated by using an encoder network based on a convolutional layer, where w and h are spatial sizes of an input image, and C is a quantity of channels. For an RGB input image with a spatial size of 224×224, computational complexity of the encoder and computational complexity of the decoder are 3.56×10⁹ and 2.85×10⁹ floating-point operations per second (floating-point operations per second, FLOPS), respectively.

The visual task neural network (briefly referred to as the feature domain task network) that uses a feature map as an input has an obvious disadvantage compared with the visual task neural network (briefly referred to as the image domain task network) that uses an image as an input. When the image domain task network runs on a device with a low computing power, a to-be-analyzed image ImageA (for example, a decoded and reconstructed image) may be down-sampled into an image ImageB with a smaller resolution, and then the ImageB is input into the image domain task network. This reduces a computing power for neural network inference. This is because the computing power for neural network inference increases with the increase of the resolution of the input image. Common down-sampling includes bilinear interpolation (bilinear interpolation), nearest interpolation (nearest interpolation), and bicubic interpolation (bicubic interpolation), for example, a torch.nn.functional.interpolate function in pytorch. After the image is down-sampled, analysis precision of the visual task network is not significantly reduced. In other words, analysis precision obtained by inputting the high-resolution image ImageA to the image domain task network is slightly greater than analysis precision obtained by inputting the low-resolution image ImageB to the image domain task network, and there is little difference in analysis precision between the two networks. For example, performance of Resnet-50 on an Imagenet validation set decreases by approximately 1%. With this feature, the image domain task network can down-sample the input image to easily adjust the computing power.

However, for the feature domain task network, if conventional down-sampling methods such as bilinear interpolation are used to scale the feature map that is input into the network, analysis precision is significantly reduced. This is because the feature map is more nonlinear than the image, and if methods such as bilinear interpolation and nearest interpolation are used to down-sample the feature map, information in the feature map is significantly damaged. For example, for performance of cResnet-39 on the Imagenet validation set, if the nearest interpolation method is used to down-sample an input feature map by a factor of 2, analysis precision is reduced by more than 10%. Finding an appropriate feature domain down-sampling method is key to the feature domain analysis task.

### (5) Dynamic stride network

To reduce a calculation amount of an image domain machine learning network, this application proposes a dynamic stride network (Dynamic Stride Net). As shown in FIG. 4, an overall backbone network of the dynamic stride network is a dynamic stride residual block (Dynamic StrideResBlock). In addition, the dynamic stride network further includes a stride prediction module (Gating Module), for example, Gᵢ₋₁, Gᵢ, and Gi+i in FIG. 4. The stride prediction module is configured to dynamically predict a stride of each dynamic stride residual block in real time based on a network input, so that a network calculation amount is dynamically reduced, and precision is ensured. A dynamic stride means that a stride of a network or a module in the network dynamically changes instead of being fixed.

The dynamic stride network is oriented to an image domain machine visual analysis task. A fixed-size image is input into the dynamic stride network, so that a calculation amount of the image domain visual analysis task is reduced. However, the problem of adapting to different resolutions in a feature domain machine analysis task is not resolved. In addition, the introduced stride prediction module brings an extra calculation amount. The dynamic stride of the network needs to be calculated in real time during network inference, posing a great challenge to a current mainstream device-side inference framework and inference acceleration chip, and also affecting device-side application prospect of the dynamic stride network.

The following describes the technical solutions provided in this application in detail with reference to specific implementations.

To resolve a problem of how a feature domain task network that uses a feature map as an input adapts to input feature maps of different sizes under a given computing power, this application designs a feature domain task network that uses a feature map output by a codec oriented to an artificial neural network as an input. The feature domain task network automatically adapts to input feature maps of different sizes through dynamic stride convolution (Dynamic Stride Convolution, DSC). In this way, when the feature domain task network provided in this application uses feature maps of multiple sizes as an input, for example, uses feature maps of different sizes formed after AI encoding and decoding are performed on images of multiple sizes as an input, a computing power of the feature domain task network may remain at similar levels. From another perspective, the feature domain task network has good compatibility with feature maps of different sizes. In a large size range of input feature maps, both a calculation amount and precision of the feature domain task network can be maintained.

The feature domain task network provided in this application may be a dynamic stride convolutional neural network.

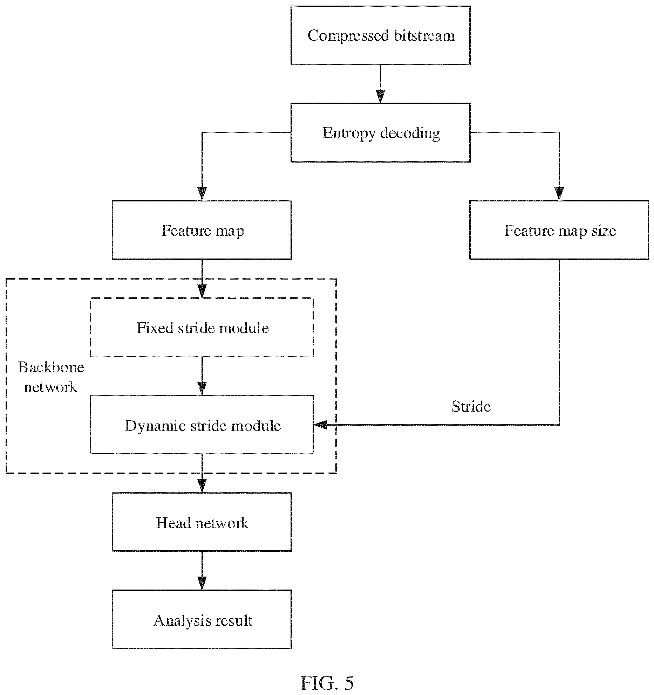

Refer to FIG. 5. FIG. 5 is a schematic diagram of a structure of a dynamic stride convolutional neural network according to an embodiment of this application. As shown in FIG. 5, the dynamic stride convolutional neural network includes a backbone network and a head network. Optionally, the dynamic stride convolutional neural network may further include a neck network and the like that are between the backbone network and the head network and that are not shown in FIG. 5.

The head network of the dynamic stride convolutional neural network is strongly related to a specific analysis task. For example, the head network may be a classification head network that includes a fully connected layer, a detection box head network that predicts object detection box processing, or a segmentation head network that performs object segmentation. An analysis result (or a processing result) obtained by the head network also varies with a task. For example, a classification label and a confidence degree are obtained in a classification task, a location, a type, and a confidence degree of a detection box are obtained in a detection task, and an object mask (Mask) is obtained in a segmentation task.

An input into the dynamic stride convolutional neural network is a feature map, and an output is an analysis result of the feature map. The feature map may be feature map data obtained by decoding a bitstream, for example, a feature map obtained by decoding a feature map bitstream by using an entropy decoding module (the entropy decoding module in FIG. 1) of an end-to-end image decoder.

The backbone network of the dynamic stride convolutional neural network includes dynamic stride modules. The dynamic stride module may be a dynamic stride convolution module, for example, a dynamic stride convolutional layer, a dynamic stride residual block, or the like. In an inference phase of the dynamic stride convolutional neural network, a stride of the dynamic stride module is determined based on a size of the input feature map of the dynamic stride convolutional neural network. It should be understood that the dynamic stride module is used for down-sampling in network calculation. Different strides of the dynamic stride modules indicate different down-sampling rates.

Specifically, in a training phase of the dynamic stride convolutional neural network, a stride policy is formulated: Correspondences between different feature map size ranges and strides of the dynamic stride modules are determined. In the inference phase of the dynamic stride convolutional neural network, the stride policy determined in the training phase is performed. To be specific, based on the size of the input feature map and the determined correspondences between feature map size ranges and strides of the dynamic stride modules, a stride of a dynamic stride module corresponding to the size of the input feature map in the inference phase is determined. Like the input feature map, the size of the input feature map may also be obtained by decoding the bitstream. For example, the input feature map and the size of the input feature map are obtained by decoding the feature map bitstream by using the entropy decoding module (for example, the entropy decoding module in FIG. 1) of the end-to-end image decoder.

Optionally, the backbone network may further include a fixed stride module. The fixed stride module may be a fixed stride convolutional layer, a fixed stride residual block, or the like. A stride of the fixed stride module may be any value, and is set based on a network requirement. This is not specifically limited in this application.

It should be noted that FIG. 5 shows an example of a fixed stride module, a dynamic stride module, and a connection relationship between the fixed stride module and the dynamic stride module. It should be understood that the backbone network of the dynamic stride convolutional neural network includes P dynamic stride modules, P is any positive integer, and a specific value of P may be determined based on a network requirement. This is not specifically limited in this application. In addition, the backbone network of the dynamic stride convolutional neural network may include one or more fixed stride modules. A specific quantity of fixed stride modules included in the backbone network of the dynamic stride convolutional neural network may be set based on a network requirement. This is not specifically limited in this application. Further, a location relationship between the dynamic stride module and the fixed stride module in the dynamic stride convolutional neural network, namely, the connection relationship between the dynamic stride module and the fixed stride module, may be set based on a network requirement. This is not specifically limited in this application.

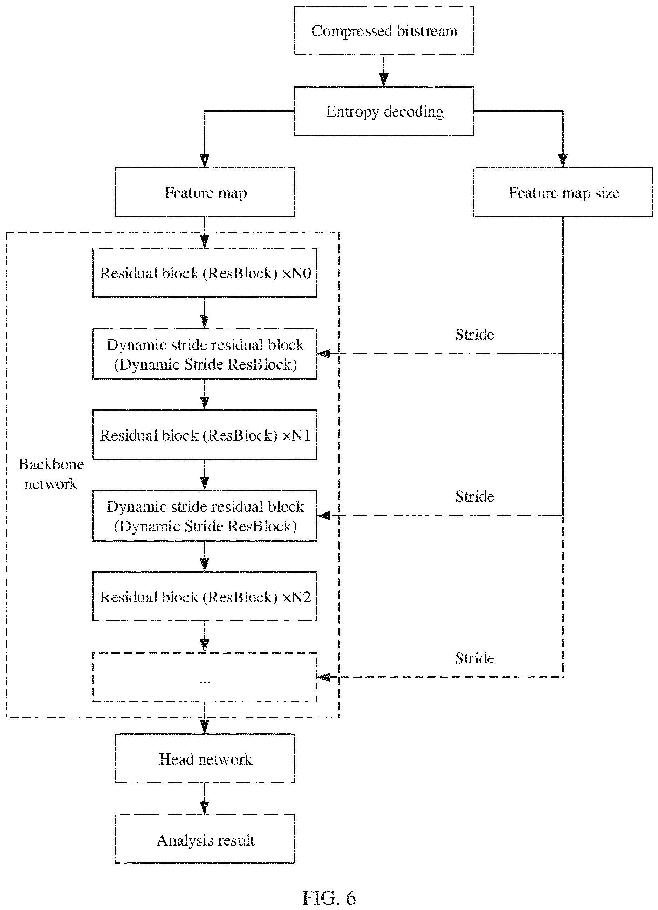

In a possible design, a specific structure of the dynamic stride convolutional neural network shown in FIG. 5 may be shown in FIG. 6. FIG. 6 is a schematic diagram of a structure of a dynamic stride convolutional neural network based on a dynamic stride residual block according to an embodiment of this application. The backbone network of the dynamic stride convolutional neural network includes at least N0+N1+N2+2 residual blocks. Specifically, the at least N0+N1+N2+2 residual blocks include at least two dynamic stride residual blocks and at least N0+N1+N2 fixed stride residual blocks. In a data flow direction in the backbone network, first to N0^{th} residual blocks are fixed stride residual blocks, an (N0+1)^{th} residual block is a dynamic stride residual block, (N0+2)^{th} to (N0+N1+1)^{th} residual blocks are fixed stride residual blocks, an (N0+N1+2)^{th} residual block is a dynamic stride residual block, and (N0+N1+3)^{th} to (N0+N1+N2+2)^{th} residual blocks are fixed stride residual blocks.

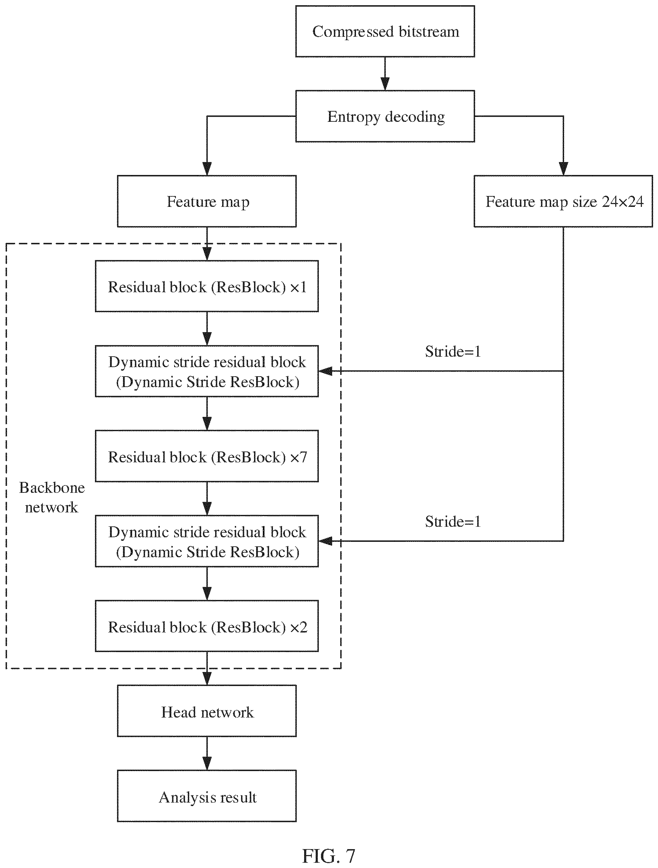

FIG. 7, FIG. 8, and FIG. 9 each are a schematic diagram of an example structure of the dynamic stride convolutional neural network shown in FIG. 6. As shown in FIG. 7, FIG. 8, and FIG. 9, N0=1, N1=7, and N2=2. The backbone network of the dynamic stride convolutional neural network includes 12 residual blocks, where a second residual block and a tenth residual block are dynamic stride residual blocks, and the other 10 residual blocks are fixed stride residual blocks.

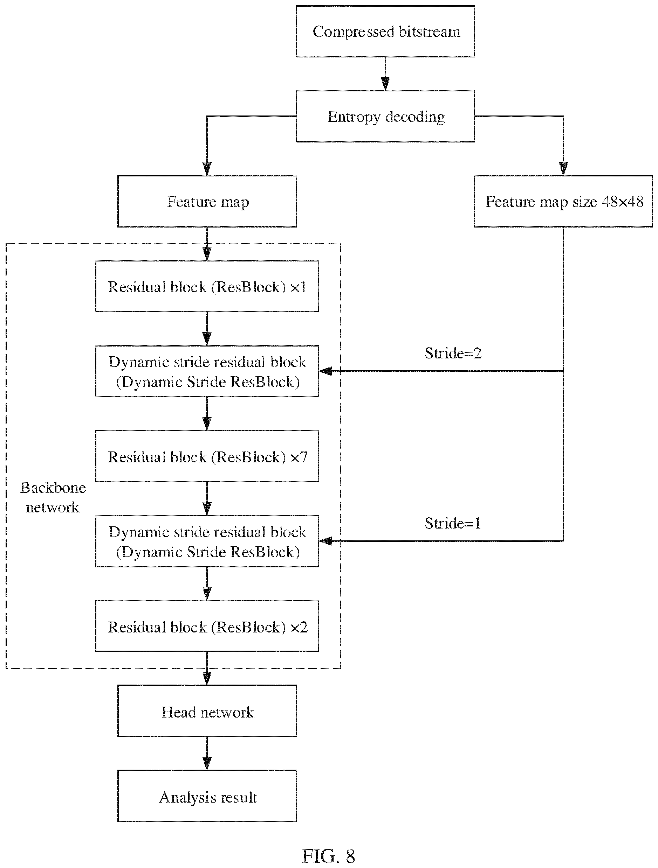

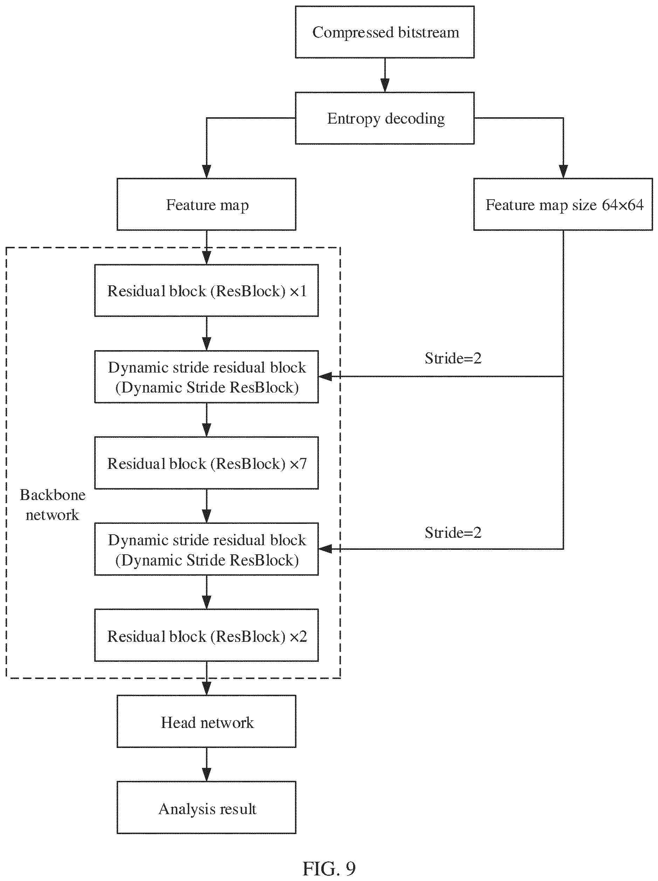

Based on a principle that the network adapts to input feature maps of different sizes on a premise of maintaining a calculation amount by using a stride policy of different dynamic stride residual blocks, FIG. 7, FIG. 8, and FIG. 9 each show a stride policy.
(1) For an input feature map whose size is less than or equal to 24×24, strides of two dynamic stride residual blocks are both 1, as shown in FIG. 7.
(2) For an input feature map whose size is greater than 24×24 and less than or equal to 48×48, strides of two dynamic stride residual blocks are 2 and 1, respectively, as shown in FIG. 8.
(3) For an input feature map whose size is greater than 48×48 and less than or equal to 64×64, strides of two dynamic stride residual blocks are both 2, as shown in FIG. 9.

For a stride adjustment policy of a dynamic stride residual block, FIG. 7, FIG. 8, and FIG. 9 are only examples. Essentially, the stride policy is a tool to balance the calculation amount and precision of the network. In the training phase, the correspondences between strides and feature size ranges are determined based on requirements of a specific service deployment environment on a computing power and precision. In the inference phase, the specified stride policy is performed. On a device with an abundant computing power, the stride of the dynamic stride residual block may be set to a small value, so that the calculation amount and precision of the network are high. On a device with a limited computing power, the stride of the dynamic stride residual block may be set to a large value, so that the calculation amount of the network is small, and with an appropriate training strategy, precision can be prevented from a cliff-like decline.

An inference process in which the dynamic stride convolutional neural network shown in FIG. 7, FIG. 8, and FIG. 9 are combined with video or image encoding and decoding application is shown as follows.

Step 1: Perform entropy decoding on a compressed bitstream to obtain a feature map F_A and size information of the feature map F_A, where the size information includes a length and a width of the feature map, and optionally may further include a quantity of channels, and the like.

Step 2: Determine strides of two dynamic stride residual blocks in the dynamic stride convolutional neural network based on the length and width information of the feature map F_A obtained in step 1.

Step 3: Input the feature map F_A obtained in step 1 to the dynamic stride convolutional neural network, perform inference based on the strides of the dynamic stride residual blocks determined in step 2, and obtain a feature map F_B through calculation sequentially by using the residual blocks of the backbone network of the dynamic stride convolutional neural network.

Step 4: Input the feature map F_B to the head network of the dynamic stride convolutional neural network to obtain an analysis result.

In a possible design, the dynamic stride modules are plug-and-play in the dynamic stride convolutional neural network, and a quantity and locations of the dynamic stride modules in the dynamic stride convolutional neural network are flexibly adjustable.

For example, the dynamic stride residual blocks shown in FIG. 6 are plug-and-play in the dynamic stride convolutional neural network shown in FIG. 6, and a quantity and locations of the dynamic stride residual blocks in the dynamic stride convolutional neural network shown in FIG. 6 are flexibly adjustable.

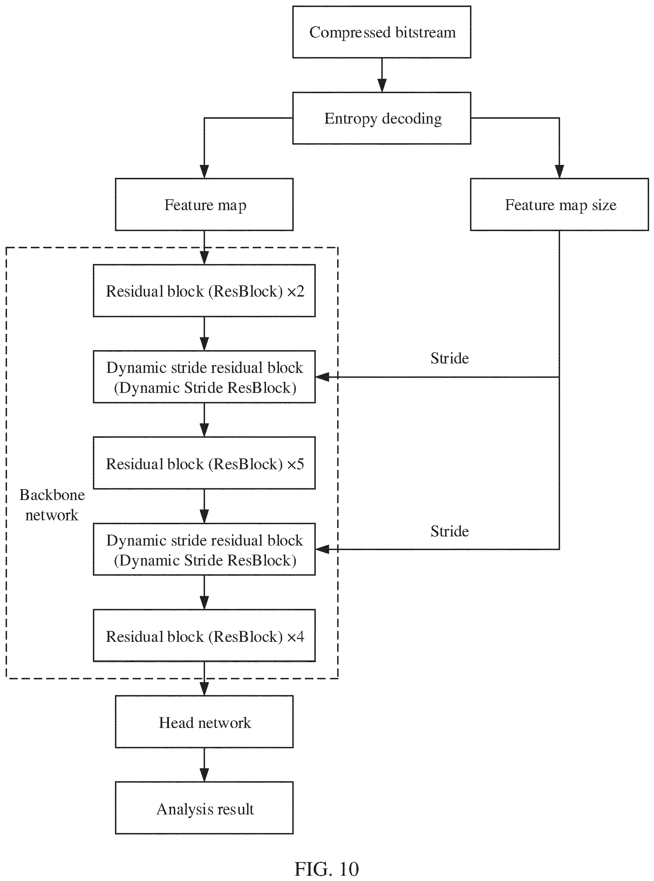

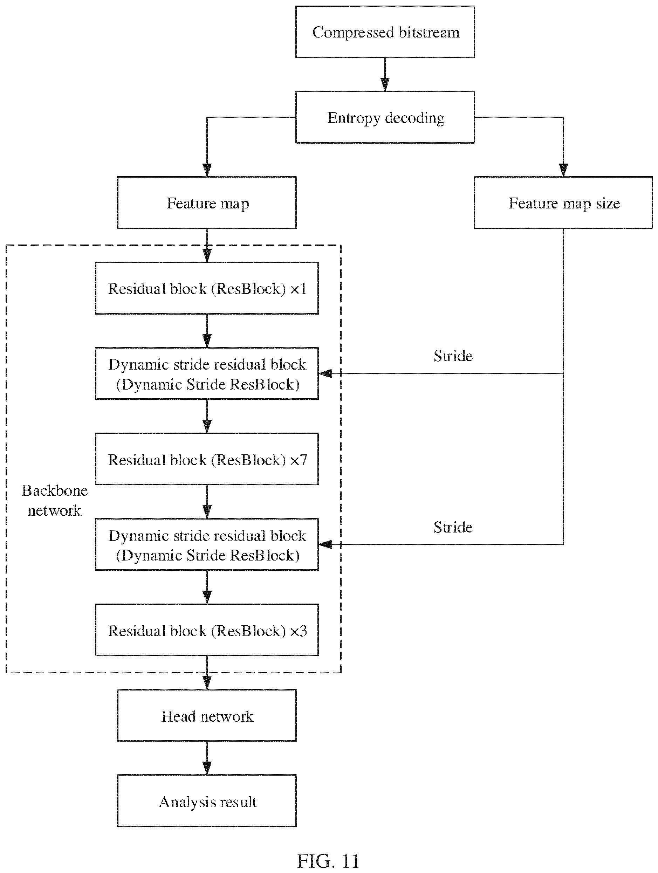

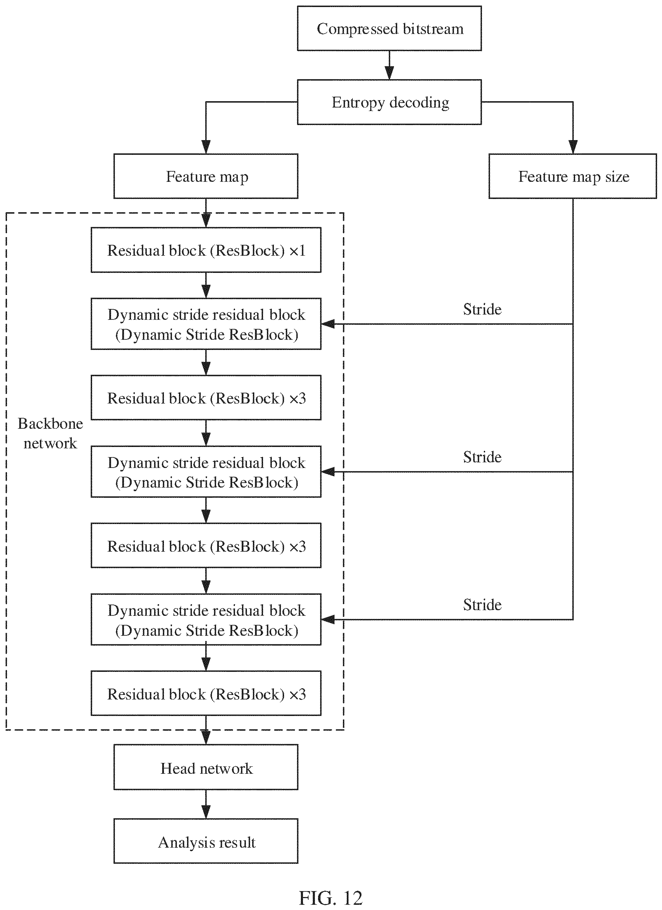

FIG. 10, FIG. 11, and FIG. 12 show several deployment examples of the dynamic stride residual blocks in the dynamic stride convolutional neural network shown in FIG. 6. FIG. 10 shows a first example. There are 13 residual blocks in the entire backbone network of the dynamic stride convolutional neural network, and two dynamic stride residual blocks are respectively located at locations of a third residual block and a ninth residual block. FIG. 11 shows a second example. There are 13 residual blocks in the entire backbone network of the dynamic stride convolutional neural network, and two dynamic stride residual blocks are respectively located at locations of a second residual block and a tenth residual block. FIG. 12 shows a third example. There are 13 residual blocks in the entire backbone network of the dynamic stride convolutional neural network, and three dynamic stride residual blocks are respectively located at locations of a second residual block, a sixth residual block, and a tenth residual block.

In this application, the dynamic stride modules of the dynamic stride convolutional neural network are flexibly adjustable, so that the entire network may be large or small, and accuracy and operation efficiency can be flexibly considered. For a cloud device with a sufficient computing power, the dynamic stride modules may be placed at rear locations of the network, and the network is deepened, to improve precision. For a device with an insufficient computing power, the dynamic stride modules may be placed at front locations of the network, and a quantity of layers of the network is reduced, to improve computing efficiency. To optimize a computing power and precision of the network, for actually deployed hardware, a quantity and locations of the dynamic stride modules on the network may be searched for by using an automatic search policy, and a specific structure of the network may be determined based on a service scenario.

It should be noted that, in FIG. 6 to FIG. 12, the dynamic stride convolutional neural network provided in this application is described by using an example in which the dynamic stride module is a dynamic stride residual block. It should be understood that the dynamic stride module in FIG. 6 to FIG. 12 may alternatively be a dynamic stride convolutional layer, and a function and a principle of the dynamic stride convolutional layer on the network are the same as those of the dynamic stride residual block.

The dynamic stride convolutional neural network provided in this application has at least the following beneficial effects.
1. The dynamic stride convolutional neural network selects the strides of the one or more dynamic stride modules of the dynamic stride convolutional neural network based on the size of the input feature map, and an additional network structure and parameter are not introduced. The input feature map is processed by using the one or more dynamic stride modules, and the network can work well in a large input feature map size range while taking into account network running efficiency, a model size, and precision.
2. Because the stride of the dynamic stride module is irrelevant to content of the input feature map and is only related to the size of the input feature map, the network structure in the inference process may be considered as static, and a problem that a device-side framework and a device-side inference acceleration hardware platform do not support a dynamic inference map does not exist.

The preceding advantages are friendly to the device-side platform with limited computing and storage resources, and facilitate deployment of the network on the device-side inference platform.

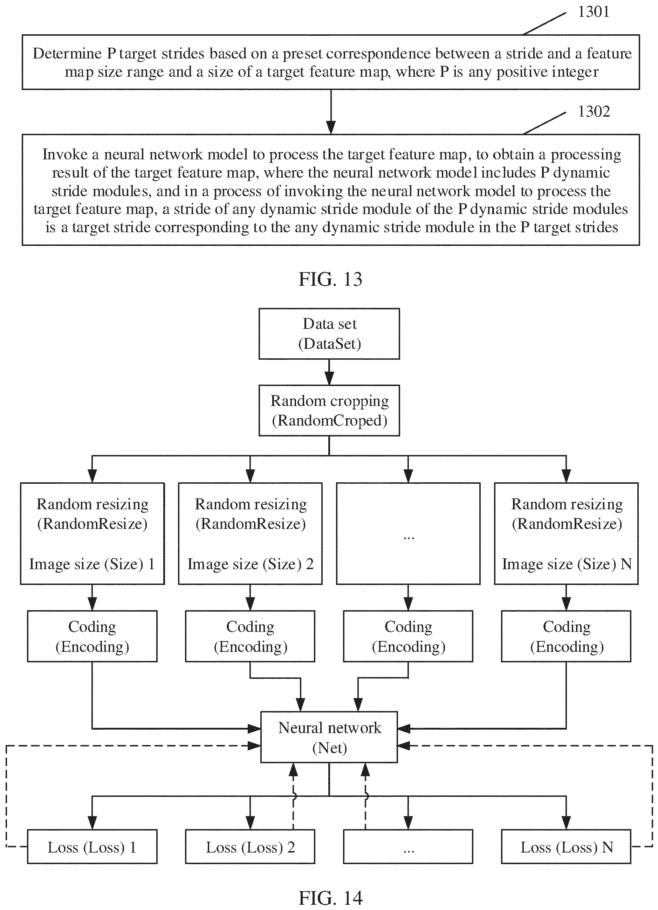

Refer to FIG. 13. FIG. 13 is a flowchart of a process 1300 of a feature map processing method according to an embodiment of this application. The process 1300 is described as a series of steps or operations. It should be understood that the process 1300 may be performed in various sequences and/or may occur simultaneously, and is not limited to an execution sequence shown in FIG. 13. The process 1300 may be performed by an electronic device, and the process 1300 includes but is not limited to the following steps or operations.

Step 1301: Determine P target strides based on a preset correspondence between a stride and a feature map size range and a size of a target feature map, where P is any positive integer.

Step 1302: Invoke a neural network model to process the target feature map, to obtain a processing result of the target feature map, where the neural network model includes P dynamic stride modules, the P dynamic stride modules correspond to the P target strides, and in a process of invoking the neural network model to process the target feature map, a stride of any dynamic stride module of the P dynamic stride modules is a target stride corresponding to the any dynamic stride module in the P target strides.

The neural network model may be any dynamic stride convolutional neural network shown in FIG. 5 to FIG. 12.

The preset correspondence between the stride and the feature map size range is determined in a training phase of the neural network model. In addition, in the training phase of the neural network model, a sample feature map is input into a neural network (for example, any dynamic stride convolutional neural network shown in FIG. 5 to FIG. 12). When the neural network is trained, training strides of the P dynamic stride modules are also determined based on a size of the input sample feature map and the preset correspondence between the stride and the feature map size range. For example, the P training strides are determined based on the size of the sample feature map and the preset correspondence between the stride and the feature map size range, where the P training strides are in a one-to-one correspondence with the P dynamic stride modules. A stride of any dynamic stride module of the P dynamic stride modules is a training stride corresponding to the any P dynamic stride module in the P training strides.

That the P dynamic stride modules correspond to the P target strides may be specifically that the P dynamic stride modules are in a one-to-one correspondence with the P target strides. In this way, for any input feature map of the neural network model, a group of target strides may be determined based on a size of the input feature map and the preset correspondence between the stride and the feature map size range. The group of target strides includes P target strides. The strides of the P dynamic stride modules are configured as the P target strides in a one-to-one correspondence. It should be noted that before the target feature map is input into the neural network model, the strides of the P dynamic stride modules may be configured as the P target strides in a one-to-one correspondence, and then a stride of each module in the neural network model is fixed. Alternatively, when the neural network model performs processing on the target feature map, for a dynamic stride module, before a data flow reaches the dynamic stride module or when a data flow reaches the dynamic stride module, a target stride corresponding to the dynamic stride module is selected from the P target strides and configured as a stride of the dynamic stride module.

In this embodiment of this application, the neural network model includes the P dynamic stride modules. Specifically, a backbone network of the neural network model includes the P dynamic stride modules. Determining the preset correspondence between the stride and the feature map size range in a training phase of the neural network model is determining a correspondence between a stride of each of the P dynamic stride modules and an input feature map size range. In an inference phase of the neural network model, the stride of each of the P dynamic stride modules is first obtained based on the size of the target feature map and the preset correspondence between the stride and the feature map size range. Then, the strides of the P dynamic stride modules are configured as the foregoing determined strides. Then, the target feature map is input into the neural network model for processing, and the processing result of the target feature map is obtained. The dynamic stride module may perform down-sampling on the feature map. If a feature map size range to which an input feature map belongs is different, a corresponding stride of the dynamic stride module is also different, and a down-sampling rate of the dynamic stride module is also different. Therefore, when a size of the input feature map is large, an appropriate stride of the dynamic stride module may be selected based on the size of the input feature map, that is, an appropriate down-sampling rate is selected. In this way, compared with a calculation amount for processing a small-sized input feature map, the calculation amount is not increased when the neural network model processes the large-sized input feature map. In addition, for the neural network model, when the size range to which the input feature map belongs is different, only the stride of the dynamic stride module changes, but a model parameter (namely, a weight parameter) of the dynamic stride module does not change. Therefore, for input feature maps of different sizes, the model parameters of the neural network model are the same. A parameter of the neural network model is fixed in a training process. In a process of obtaining the neural network model through training, a training sample is appropriately selected, so that the training sample includes a sample feature map of each size range. In this way, the neural network model obtained through training adapts to an input feature map of each size range, and precision can be ensured. In this way, in this application, no additional network structure is introduced, and no model parameter is added, so that the feature domain task network can dynamically adapt to input feature maps of different sizes without increasing a calculation amount. That is, the network can work well in a large input size range while taking into account network operation efficiency, a model size, and precision.

In a possible design, the target feature map is a feature map obtained by decoding a bitstream.

In a process of obtaining the target feature map by decoding the bitstream, the size of the target feature map may also be obtained synchronously through decoding. For example, the target feature map and the size of the target feature map are obtained by decoding a feature map bitstream by using the entropy decoding module in FIG. 1.

In this design, the target feature map input into the neural network model is the feature map obtained by decoding the bitstream. For example, the target feature map is a feature map obtained by decoding a feature map bitstream by using an entropy decoding module of an end-to-end image decoder. In this way, for video or image encoding and decoding, there is no need to perform image reconstruction on the feature map obtained by decoding the bitstream to obtain a reconstructed image and input the reconstructed image into the neural network model for processing. That is, a process of image reconstruction may be omitted. The feature map obtained by decoding the bitstream is directly input into the neural network model for analysis. This reduces a computing power.

In a possible design, the dynamic stride module is a dynamic stride convolutional layer or a dynamic stride residual block.

For example, the neural network model may be any dynamic stride convolutional neural network shown in FIG. 6 to FIG. 12. In this case, the dynamic stride module may be the dynamic stride residual block shown in FIG. 6 to FIG. 12.

In this design, the convolutional layer or the residual block performs down-sampling on the feature map. Therefore, the dynamic stride module may be the dynamic stride convolutional layer or the dynamic stride residual block. For a different size of an input feature map, an appropriate stride of the dynamic stride convolutional layer or the dynamic stride residual block is determined. When the neural network model is invoked to process the input feature map, the determined stride is used as the stride of the dynamic stride convolutional layer or the dynamic stride residual block. Therefore, under a given computing power, the neural network model can adapt to input feature maps of different sizes.

In a possible design, the method further includes: determining the preset correspondence between the stride and the feature map size range, where the preset correspondence between the stride and the feature map size range includes a correspondence between N groups of strides and N feature map size ranges, and N is any positive integer; obtaining M groups of sample feature maps, where any group of sample feature maps in the M groups of sample feature maps includes a feature map in any feature map size range of the N feature map size ranges, and M is any positive integer; and performing multiple times of iterative training on a neural network based on the M groups of sample feature maps to obtain the neural network model, where the neural network model includes the P dynamic stride modules. In a process of training the neural network based on any sample feature map, the P dynamic stride modules correspond to P training strides, the stride of the any dynamic stride module of the P dynamic stride modules is a training stride corresponding to the any dynamic stride module in the P training strides, the P training strides are P training strides corresponding to the any sample feature map, and the P training strides corresponding to the any sample feature map are determined from the N groups of strides based on the correspondences between the N groups of strides and the N feature map size ranges and a size of the any sample feature map.

The neural network for obtaining the foregoing neural network model through training may be any dynamic stride convolutional neural network shown in FIG. 5 to FIG. 12.

In this design, the determining the preset correspondence between the stride and the feature map size range in a training phase of the neural network model specifically includes setting the correspondences between the N groups of strides and the N feature map size ranges, where a value of N may be determined based on an actual requirement. For any input sample feature map, if a size of the input sample feature map belongs to one of the N feature map size ranges, a group of strides corresponding to the input sample feature map is a group of strides corresponding to the feature map size range to which the input sample feature map belongs. Because the neural network model includes the P dynamic stride modules, the group of strides corresponding to the any sample feature map includes the P training strides. During training, the strides of the P dynamic stride modules are configured as the P training strides in a one-to-one correspondence. In this way, for sample feature maps of different feature map size ranges, the strides of the dynamic stride modules in the neural network during training are different. When the training sample is selected, the M groups of sample feature maps may be selected, where a value of M may be determined based on an actual requirement. Any group of sample feature maps in the M groups of sample feature maps includes feature maps in the foregoing N feature map size ranges. In this way, the sample feature maps in the feature map size ranges are balanced during training. In conclusion, in this application, the neural network is trained by using the sample feature maps in the different feature map size ranges at the corresponding strides, and quantities of the sample feature maps in the different feature map size ranges are balanced. This helps improve precision of processing the input feature maps of different sizes by the neural network model.

The training phase of the neural network model may be roughly divided into three phases described in detail below.

First phase: Determine the preset correspondence between the stride and the feature map size range.

Before the neural network is trained, the preset correspondence between the stride and the feature map size range needs to be determined, that is, a stride policy of the neural network and N (N is any positive integer) groups of resolution parameters (or N feature map size ranges) that participate in training are determined. In this application, the stride policy and the N groups of resolution parameters are quite flexibly selected, and the stride policy and the N groups of resolution parameters may be specified based on requirements of a specific application scenario. The preset correspondence between the stride and the feature map size range includes a correspondence between N groups of strides and N feature map size ranges. Specifically, there is a one-to-one correspondence between the N groups of strides and the N feature map size ranges.

For example, in a target application scenario, a computing power is limited. If a short side range of an image is [128, 1024], and an encoder is an encoder for down-sampling by a factor of 16, a short side range of a feature map obtained through encoding by using the encoder is [8, 64]. The neural network includes two dynamic stride modules. The short side range of the feature map may be divided into [8, 24], (24, 48], and (48, 64]. In this case, correspondences between three groups of strides and three feature map size ranges are as follows: When the short side range of the feature map is [8, 24], a group of strides corresponding to the two dynamic stride modules is (1, 1), for example, the dynamic stride convolutional neural network shown in FIG. 7; when the short side range of the feature map is (24, 48], a group of strides corresponding to the two dynamic stride modules is (2, 1), for example, the dynamic stride convolutional neural network shown in FIG. 8; and when the short side range of the feature map is (48, 64], a group of strides corresponding to the two dynamic stride modules is (2, 2), for example, the dynamic stride convolutional neural network shown in FIG. 9. In this way, compared with a feature map whose short side range is [8, 24] and that is used as the input into the neural network, feature maps whose short side ranges are (24, 48] and (48, 64] and that are as the input into the neural network do not greatly increase a calculation amount of the neural network. In addition, based on the correspondences between the three groups of strides and the three feature map size ranges, when the neural network is trained, three groups of size ranges may be set for the sample feature map, and are respectively [8×16, 24×16], (24×16, 48×16], and (48×16, 64×16].

It should be understood that after the N groups of strides are in the one-to-one correspondence with the N feature map size ranges, in the training phase, a feature map size range to which a size of the sample feature map belongs is first determined in the N feature map size ranges. A group of strides corresponding to the feature map size range is used as a group of training strides corresponding to the sample feature map. When the sample feature map is input into the neural network, the strides of the P dynamic stride modules are P training strides in the group of training strides. Similarly, in the inference phase, a feature map size range to which the size of the target feature map belongs is first determined in the N feature map size ranges. A group of strides corresponding to the feature map size range is used as a group of target strides corresponding to the target feature map. When the target feature map is input into the neural network model, the strides of the P dynamic stride modules are P target strides in the group of target strides.

Second phase: Obtain a training sample feature map.

After the preset correspondence between the stride and the feature map size range is determined, that is, after the correspondences between the N groups of strides and the N feature map size ranges are determined, the training sample feature map may be obtained based on the correspondence.

Any group of sample feature maps in the obtained M groups of sample feature maps is equivalent to one batch (batch) of training data. Each batch of training data in training includes feature maps of N feature map size ranges of each of a plurality of images. When each batch of training data is used for training, a sample feature map is randomly selected from each feature map size range to participate in training.

In a possible design, the any group of sample feature maps in the M groups of sample feature maps includes N sample feature maps, the N sample feature maps are obtained by encoding N first sample images, the N first sample images are obtained by resizing a second sample image, the N first sample images include images in N image size ranges, and the N image size ranges correspond to the N feature map size ranges.

In this design, the second sample images are resized to the different image size ranges to obtain the N first sample images. Then, an encoder separately encodes the N first sample images to obtain the N sample feature maps, where the N sample feature maps are in a one-to-one correspondence with the N first sample images. The N first sample images include the images in the N image size ranges, and the N image size ranges are in a one-to-one correspondence with the N feature map size ranges. Therefore, the N sample feature maps obtained by encoding the N first sample images include the sample feature maps in the N feature map size ranges. In this way, the N sample feature maps have the same content but only different sizes. The N sample feature maps are used to train the neural network. That is, the neural network is trained in a multi-size and aligned data joint training manner. Compared with a single-size or multi-size and non-aligned data training manner for training a neural network, this manner better improves precision of the neural network model obtained through training.

In a possible design, the obtaining M groups of sample feature maps includes: obtaining M second sample images; and performing the following operations for each second sample image in the M second sample images to obtain the M groups of sample feature maps, where the M groups of sample feature maps correspond to the M second sample images: resizing a second sample image F to obtain N first sample images, where the second sample image F is any one of the M second sample images, the N first sample images include images in N image size ranges, and the N image size ranges correspond to the N feature map size ranges; and separately inputting the N first sample images to the encoder to obtain N sample feature maps included in a group of sample feature maps corresponding to the second sample image F, where the M groups of sample feature maps include the group of sample feature maps corresponding to the second sample image F.

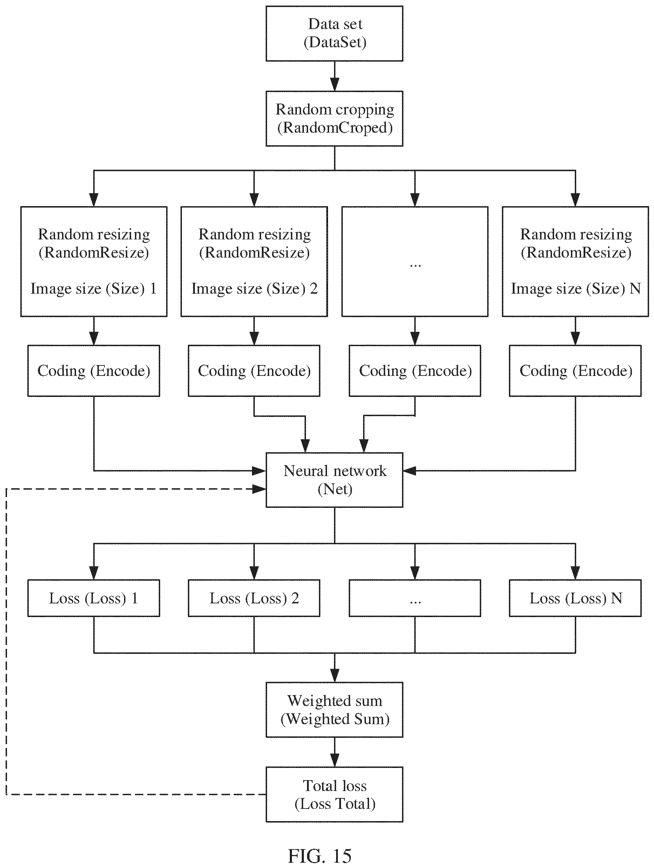

The sample feature map is obtained by inputting the sample image to the encoder for encoding. As shown in FIG. 14 or FIG. 15, a data set includes a plurality of original sample images for training. To increase a quantity of sample images, the following operations may be first performed: Random cropping may be performed on any original sample image in the plurality of original sample images, so that a plurality of sample images may be obtained from one original sample image, and the sample images obtained through cropping are used as second sample images, so that a quantity of the second sample images is far greater than a quantity of the original sample images; and any second sample image may be randomly resized, so that a plurality of sample images may also be obtained from one second sample image, and the sample images obtained through resizing are used as first sample images, so that a quantity of the first sample images is far more greater than the quantity of the original sample images. Then, all the first sample images are input into the encoder for encoding, to obtain all the sample feature maps.

In an example, the second sample image may be resized based on the N image size ranges. As shown in FIG. 14 or FIG. 15, any second sample image F in the M second sample images is resized to obtain N first sample images, where the N first sample images include images in N image size ranges. For example, sizes of the N first sample images are respectively an image size 1, an image size 2, ..., and an image size N. In addition, the N image size ranges are in a one-to-one correspondence with the N feature map size ranges. For example, the image size 1, the image size 2, ..., and the image size N are in a one-to-one correspondence with the N feature map size ranges. Sizes of the N sample feature maps obtained after the N first sample images are encoded by the encoder by a specific down-sampling factor are also in a one-to-one correspondence with the N feature map size ranges. That is, the N sample feature maps have the sizes of the N sample feature maps, and the sizes of the N sample feature maps are in a one-to-one correspondence with the N feature map size ranges. For example, the sizes of the N sample feature maps are respectively a feature map size 1, a feature map size 2, ..., and a feature map size N. The image size 1, the image size 2, ..., and the image size N are in one-to-one correspondence with the feature map size 1, the feature map size 2, ..., and the feature map size N. In addition, the feature map size 1, the feature map size 2, ..., and the feature map size N belong to the foregoing N feature map size ranges in a one-to-one correspondence.

It should be noted that the M second sample images for obtaining the M groups of sample feature maps may be obtained through random cropping from a same original sample image, or may be obtained through random cropping from different original sample images.

In this way, the N sample feature maps in any group of the obtained M groups of sample feature maps have the same content but only different sizes. The N sample feature maps are used to train the neural network. That is, the neural network is trained in a multi-size and aligned data joint training manner. Compared with a single-size or multi-size and non-aligned data training manner for training a neural network, this manner better improves precision of the neural network model obtained through training.

Third phase: Obtain the neural network model through training based on the determined preset correspondence between a stride and a feature map size range and the obtained training sample feature map.

After the M groups of sample feature maps are obtained, M batches of training data are obtained. In this way, the neural network may be trained based on the M batches of training data, and parameters of the neural network may be iteratively updated to obtain the neural network model through training.

Each batch of training data includes sample feature maps in the N feature map size ranges. During training of the neural network, one batch of training data may be input each time, or one sample feature map in one batch may be input each time. Each sample feature map is input into the neural network to calculate a loss, and backpropagation is performed to update the parameters (weights) of the neural network. In this application, loss calculation and backpropagation may be performed in two manners. Losses for the sample feature maps in the feature map size ranges may be separately obtained through calculation and separately transmitted back, or a sum of losses obtained through calculation for the sample feature maps in the feature map size ranges may be transmitted back, or even a weighted sum of losses obtained through calculation for the sample feature maps in the different feature map size ranges may be transmitted back. The following separately provides descriptions.

Manner 1: Separately transmit back losses.

In a possible design, the performing multiple times of iterative training on a neural network based on the M groups of sample feature maps to obtain the neural network model includes: S1: performing step S11 to step S13 for a first group of sample feature maps, where the first group of sample feature maps is any group of sample feature maps in the M groups of sample feature maps: S11: inputting a first sample feature map in the first group of sample feature maps into the neural network to obtain a first loss; S12: if the first loss converges, obtaining the neural network model, or if the first loss does not converge, adjusting a parameter of the neural network based on the first loss, and performing step S13; and S13: continuing to perform the foregoing steps S11 and S 12 by using any second sample feature map that is not used for training in the first group of sample feature maps as the first sample feature map, and if the first loss still does not converge after all sample feature maps in the first group of sample feature maps are used for training, performing step S2; and S2: continuing to perform the foregoing step S1 by using any second group of sample feature maps that is not used for training in the M groups of sample feature maps as the first group of sample feature maps.

As shown in FIG. 14, N sample feature maps in one batch include sample feature maps in N feature map size ranges. One sample feature map in the N sample feature maps in the batch is input into the neural network to obtain one first loss. The first loss is transmitted back to adjust the parameters of the neural network. For example, the N sample feature maps are a sample feature map 1, a sample feature map 2, ..., and a sample feature map N, and the sizes of the sample feature maps are respectively a feature map size 1, a feature map size 2, ..., and a feature map size N. In this way, an iterative training process of one batch may be as follows: inputting the sample feature map 1 to the neural network to obtain a loss 1, and transmitting the loss 1 back to adjust the parameters of the neural network; inputting the sample feature map 2 to the neural network to obtain a loss 2, and transmitting the loss 2 back to adjust the parameters of the neural network; ...; and inputting the sample feature map N to the neural network to obtain a loss N, and transmitting the loss N back to adjust the parameters of the neural network. When a loss corresponding to one of the sample feature map 1, the sample feature map 2, and the sample feature map N converges, training ends, and the neural network model is obtained. Otherwise, another batch of sample feature maps is used to continue the foregoing iterative training.

In the training process of the neural network, loss convergence means that a loss obtained through calculation according to a loss function is less than a preset threshold.

It should be understood that, in this training manner, the parameters of the neural network are adjusted once for a sample feature map in one feature map size range. In this way, training of the sample feature map in one feature map size range is one time of iterative training.

In this design, a group of sample feature maps includes sample feature maps in N feature map size ranges. In each iterative training process, a sample feature map in one of the N feature map size ranges in the group of sample feature maps is input into the neural network, one calculation of a first loss is performed, and the first loss is transmitted back to adjust a parameter of the neural network. After all sample feature maps in the group of sample feature maps are used for training, another group of sample feature maps is used. For the another group of sample feature maps, a sample feature map in one of the N feature map size ranges is also input into the neural network each time, and a first loss is calculated once until the first loss converges, so that the neural network model is obtained. In this way, in each iterative training in this design, sample feature maps of different feature map size ranges are input into the neural network. This helps the neural network model maintain good precision for input feature maps of different sizes.

Manner 2: Transmit back all losses together.

In a possible design, the performing multiple times of iterative training on a neural network based on the M groups of sample feature maps to obtain the neural network model includes: S1: performing step S11 to step S13 for a first group of sample feature maps, where the first group of sample feature maps is any group of sample feature maps in the M groups of sample feature maps: S11: inputting the first group of sample feature maps into the neural network to obtain N first losses, where the N first losses correspond to the N feature map size ranges; S12: obtaining a second loss through calculation based on the N first losses; and S13: if the second loss converges, obtaining the neural network model, or if the second loss does not converge, adjusting a parameter of the neural network based on the second loss, and performing step S2; and S2: continuing to perform the foregoing step S 1 by using any second group of sample feature maps that is not used for training in the M groups of sample feature maps as the first group of sample feature maps.

As shown in FIG. 15, N sample feature maps in one batch include sample feature maps in N feature map size ranges. The N sample feature maps in the batch are separately input into the neural network to obtain N first losses. A second loss is obtained based on the N first losses. The second loss is transmitted back to adjust the parameters of the neural network. For example, the N sample feature maps are a sample feature map 1, a sample feature map 2, ..., and a sample feature map N, and the sizes of the sample feature maps are respectively a feature map size 1, a feature map size 2, ..., and a feature map size N. In this way, a training process of one batch may be: separately inputting the sample feature map 1, the sample feature map 2, ..., and the sample feature map N to the neural network to correspondingly obtain a loss 1, a loss 2, ..., and a loss N, obtaining a total loss through calculation based on the loss 1, the loss 2, ..., and the loss N, and transmitting the total loss back to adjust the parameters of the neural network. If the total loss converges, the neural network model is obtained. Otherwise, another batch of sample feature maps is used to continue the foregoing iterative training.

It should be understood that, in this training manner, the parameters of the neural network are adjusted once for one batch of sample feature maps. In other words, the parameters of the neural network are adjusted once for the sample feature maps in the N feature map size ranges. In this way, training of the sample feature maps in the N feature map size ranges is one time of iterative training.

In this design, a group of sample feature maps includes sample feature maps in N feature map size ranges. In each iterative training process, sample feature maps in the N feature map size ranges in the group of sample feature maps are separately input into the neural network, and one calculation of a first loss is performed on the sample feature map in each feature map size range to obtain N first losses. Then, a second loss is obtained through calculation based on the N first losses. For example, summation, weighted summation, averaging, weighted averaging, or the like is performed on the N first losses to obtain the second loss. Then, the second loss is transmitted back to adjust a parameter of the neural network. When a group of sample feature maps is used for training, another group of sample feature maps is used. For the another group of sample feature maps, sample feature maps in N feature map size ranges are also separately input into the neural network, and one calculation of a first loss is performed on the sample feature map in each feature map size range to obtain N first losses. A second loss is obtained through calculation based on the N first losses until the second loss converges, so that the neural network model is obtained. In this way, in each iterative training in this design, the sample feature maps input into the neural network include sample feature maps of different feature map size ranges. This helps the neural network model maintain good precision for input feature maps of different sizes.

It should be noted that, for a series of steps or operations described in the process 1300, correspondingly refer to corresponding descriptions in the embodiments shown in FIG. 5 to FIG. 12.

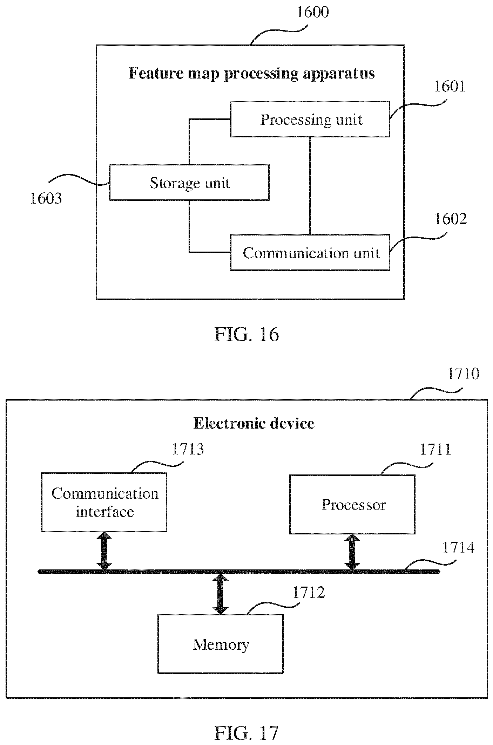

FIG. 16 is a schematic diagram of a structure of a feature map processing apparatus according to an embodiment of this application. The feature map processing apparatus 1600 is used in an electronic device. The feature map processing apparatus 1600 includes a processing unit 1601 and a communication unit 1602. The processing unit 1601 is configured to perform any step in the method embodiment shown in FIG. 13. When data transmission such as obtaining is performed, the communication unit 1602 may or may not be invoked to complete a corresponding operation. Details are described in the following.

In a possible design, the feature map processing apparatus includes: a processing unit 1601, configured to determine P target strides based on a preset correspondence between a stride and a feature map size range and a size of a target feature map, where P is any positive integer; and invoke a neural network model to process the target feature map, to obtain a processing result of the target feature map, where the neural network model includes P dynamic stride modules, the P dynamic stride modules correspond to the P target strides, and in a process of invoking the neural network model to process the target feature map, a stride of any dynamic stride module of the P dynamic stride modules is a target stride corresponding to the any dynamic stride module in the P target strides.

In a possible design, the target feature map is a feature map obtained by decoding a bitstream.

In a possible design, the dynamic stride module is a dynamic stride convolutional layer or a dynamic stride residual block.

In a possible design, the processing unit 1601 is further configured to: determine the preset correspondence between the stride and the feature map size range, where the preset correspondence between the stride and the feature map size range includes a correspondence between N groups of strides and N feature map size ranges, and N is any positive integer; obtain M groups of sample feature maps, where any group of sample feature maps in the M groups of sample feature maps includes N sample feature maps, the N sample feature maps include a feature map in any feature map size range of the N feature map size ranges, and M is any positive integer; and perform multiple times of iterative training on a neural network based on the M groups of sample feature maps to obtain the neural network model, where the neural network model includes the P dynamic stride modules. In a process of training the neural network based on any sample feature map, the P dynamic stride modules correspond to P training strides, the stride of the any dynamic stride module of the P dynamic stride modules is a training stride corresponding to the any dynamic stride module in the P training strides, the P training strides are P training strides corresponding to the any sample feature map, and the P training strides corresponding to the any sample feature map are determined from the N groups of strides based on the correspondences between the N groups of strides and the N feature map size ranges and a size of the any sample feature map.

In a possible design, the processing unit 1601 is specifically configured to: S1: perform step S11 to step S13 for a first group of sample feature maps, where the first group of sample feature maps is any group of sample feature maps in the M groups of sample feature maps: S11: inputting a first sample feature map in the first group of sample feature maps into the neural network to obtain a first loss; S12: if the first loss converges, obtaining the neural network model, or if the first loss does not converge, adjusting a parameter of the neural network based on the first loss, and performing step S13; and S13: continuing to perform the foregoing steps S11 and S12 by using any second sample feature map that is not used for training in the first group of sample feature maps as the first sample feature map, and if the first loss still does not converge after all sample feature maps in the first group of sample feature maps are used for training, performing step S2; and S2: continue to perform the foregoing step S1 by using any second group of sample feature maps that is not used for training in the M groups of sample feature maps as the first group of sample feature maps.

In a possible design, the processing unit 1601 is specifically configured to: S1: perform step S11 to step S13 for a first group of sample feature maps, where the first group of sample feature maps is any group of sample feature maps in the M groups of sample feature maps: S11: inputting the first group of sample feature maps into the neural network to obtain N first losses, where the N first losses correspond to the N feature map size ranges; S12: obtaining a second loss through calculation based on the N first losses; and S13: if the second loss converges, obtaining the neural network model, or if the second loss does not converge, adjusting a parameter of the neural network based on the second loss, and performing step S2; and S2: continue to perform the foregoing step S1 by using any second group of sample feature maps that is not used for training in the M groups of sample feature maps as the first group of sample feature maps.

In a possible design, the any group of sample feature maps in the M groups of sample feature maps includes N sample feature maps, the N sample feature maps are obtained by encoding N first sample images, the N first sample images are obtained by resizing a second sample image, the N first sample images include images in N image size ranges, and the N image size ranges correspond to the N feature map size ranges.

In a possible design, the processing unit 1601 is specifically configured to: obtain M second sample images; and perform the following operations for each second sample image in the M second sample images to obtain the M groups of sample feature maps, where the M groups of sample feature maps correspond to the M second sample images: resizing a second sample image F to obtain N first sample images, where the second sample image F is any one of the M second sample images, the N first sample images include images in N image size ranges, and the N image size ranges correspond to the N feature map size ranges; and separately inputting the N first sample images to the encoder to obtain N sample feature maps included in a group of sample feature maps corresponding to the second sample image F, where the M groups of sample feature maps include the group of sample feature maps corresponding to the second sample image F.

The feature map processing apparatus 1600 may further include a storage unit 1603, configured to store program code and data of the electronic device. The processing unit 1601 may be a processor. The communication unit 1602 may be a transceiver. The storage unit 1603 may be a memory.

It should be noted that, for implementation of the units of the feature map processing apparatus 1600 described in FIG. 16, refer to corresponding descriptions of the method embodiment shown in FIG. 13. In addition, for beneficial effects brought by the feature map processing apparatus 1600 described in FIG. 16, refer to corresponding descriptions of the method embodiment shown in FIG. 13. Details are not described herein again.

Refer to FIG. 17. FIG. 17 is a schematic diagram of a structure of an electronic device 1710 according to an embodiment of this application. The electronic device 1710 includes a processor 1711, a memory 1712, and a communication interface 1713. The processor 1711, the memory 1712, and the communication interface 1713 are connected to each other through a bus 1714.

The memory 1712 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 1712 is configured to store a related computer program and data. The communication interface 1713 is configured to receive and send data.

The processor 1711 may be one or more central processing units (central processing units, CPUs). When the processor 1711 is one CPU, the CPU may be a single-core CPU, or may be a multi-core CPU.

The processor 1711 in the electronic device 1710 is configured to read computer program code stored in the memory 1712, and perform the method shown in FIG. 13.

It should be noted that, for implementation of the operations of the electronic device 1710 described in FIG. 17, refer to corresponding descriptions of the method embodiment shown in FIG. 13. In addition, for beneficial effects brought by the electronic device 1710 described in FIG. 17, refer to corresponding descriptions of the method embodiment shown in FIG. 13. Details are not described herein again.

An embodiment of this application further provides a chip. The chip includes at least one processor, a memory, and an interface circuit. The memory, the transceiver, and the at least one processor are interconnected through a line. The at least one memory stores a computer program. When the computer program is executed by the processor, the method process shown in FIG. 13 is implemented.

An embodiment of this application further provides a computer-readable storage medium. The computer-readable storage medium stores a computer program. When the computer program is run on a computer, the method process shown in FIG. 13 is implemented.

An embodiment of this application further provides a computer program product. When the computer program product runs on a computer, the method process shown in FIG. 13 is implemented.

It should be understood that, the processor mentioned in embodiments of this application may be a central processing unit (Central Processing Unit, CPU), or may be another general purpose processor, a digital signal processor (Digital Signal Processor, DSP), an application specific integrated circuit (Application Specific Integrated Circuit, ASIC), a field programmable gate array (Field Programmable Gate Array, FPGA), or another programmable logic device, discrete gate or transistor logic device, discrete hardware component, or the like. The general-purpose processor may be a microprocessor, or the processor may be any conventional processor or the like.

It may be further understood that the memory mentioned in embodiments of this application may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. By way of example and not limitation, RAMs in many forms may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that when the processor is a general-purpose processor, a DSP, an ASIC, an FPGA, or another programmable logic device, discrete gate or transistor logic device, or discrete hardware component, the memory (a storage module) is integrated into the processor.

It should be noted that the memory described in this specification is intended to include but not limited to these memories and any memory of another appropriate type.

It should be further understood that, "first", "second", "third", "fourth", and various numbers in this specification are merely used for differentiation for ease of description, and are not intended to limit the scope of embodiments of this application.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. Persons skilled in the art may use different methods to implement the described functions for each particular application, but it should not be considered that the implementation goes beyond the scope of this application.

It may be clearly understood by persons skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The foregoing units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

A sequence of the steps of the method in embodiments of this application may be adjusted, combined, or removed based on an actual requirement.

The modules in the apparatus in embodiments of this application may be combined, divided, and deleted based on an actual requirement.

The foregoing embodiments are merely used to describe the technical solutions of this application, but not to limit the technical solutions. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A feature map processing method, comprising:
determining P target strides based on a preset correspondence between a stride and a feature map size range and a size of a target feature map, wherein P is any positive integer; and
invoking a neural network model to process the target feature map, to obtain a processing result of the target feature map, wherein
the neural network model comprises P dynamic stride modules, and in a process of invoking the neural network model to process the target feature map, a stride of any dynamic stride module of the P dynamic stride modules is a target stride corresponding to the any dynamic stride module in the P target strides.

2. The method according to claim 1, wherein the target feature map is a feature map obtained by decoding a bitstream.

3. The method according to claim 1 or 2, wherein the dynamic stride module is a dynamic stride convolutional layer or a dynamic stride residual block.

4. The method according to any one of claims 1 to 3, wherein the method further comprises:
determining the preset correspondence between the stride and the feature map size range, wherein the preset correspondence between the stride and the feature map size range comprises a correspondence between N groups of strides and N feature map size ranges, and N is any positive integer;
obtaining M groups of sample feature maps, wherein any group of sample feature maps in the M groups of sample feature maps comprises a feature map in any feature map size range of the N feature map size ranges, and M is any positive integer; and
performing multiple times of iterative training on a neural network based on the M groups of sample feature maps to obtain the neural network model, wherein
in a process of training the neural network based on any sample feature map, the stride of the any dynamic stride module of the P dynamic stride modules is a training stride corresponding to the any dynamic stride module in the P training strides, and the P training strides are determined from the N groups of strides based on the correspondences between the N groups of strides and the N feature map size ranges and a size of the any sample feature map.

5. The method according to claim 4, wherein the performing multiple times of iterative training on a neural network based on the M groups of sample feature maps to obtain the neural network model comprises:
S1: performing step S11 to step S13 for a first group of sample feature maps, wherein the first group of sample feature maps is any group of sample feature maps in the M groups of sample feature maps:
S11: inputting a first sample feature map in the first group of sample feature maps into the neural network to obtain a first loss;
S12: if the first loss converges, obtaining the neural network model, or if the first loss does not converge, adjusting a parameter of the neural network based on the first loss, and performing step S13; and
S13: continuing to perform the foregoing steps S11 and S12 by using any second sample feature map that is not used for training in the first group of sample feature maps as the first sample feature map, and if the first loss still does not converge after all sample feature maps in the first group of sample feature maps are used for training, performing step S2; and
S2: continuing to perform the foregoing step S1 by using any second group of sample feature maps that is not used for training in the M groups of sample feature maps as the first group of sample feature maps.

6. The method according to claim 4, wherein the performing multiple times of iterative training on a neural network based on the M groups of sample feature maps to obtain the neural network model comprises:
S1: performing step S11 to step S13 for a first group of sample feature maps, wherein the first group of sample feature maps is any group of sample feature maps in the M groups of sample feature maps:
S11: inputting the first group of sample feature maps into the neural network to obtain N first losses, wherein the N first losses correspond to the N feature map size ranges;
S12: obtaining a second loss through calculation based on the N first losses; and
S13: if the second loss converges, obtaining the neural network model, or if the second loss does not converge, adjusting a parameter of the neural network based on the second loss, and performing step S2; and
S2: continuing to perform the foregoing step S1 by using any second group of sample feature maps that is not used for training in the M groups of sample feature maps as the first group of sample feature maps.

7. The method according to any one of claims 4 to 6, wherein the any group of sample feature maps in the M groups of sample feature maps comprises N sample feature maps, the N sample feature maps are obtained by encoding N first sample images, the N first sample images are obtained by resizing a second sample image, the N first sample images comprise images in N image size ranges, and the N image size ranges correspond to the N feature map size ranges.

8. A feature map processing apparatus, comprising:
a processing unit, configured to:
determine P target strides based on a preset correspondence between a stride and a feature map size range and a size of a target feature map, wherein P is any positive integer; and
invoke a neural network model to process the target feature map, to obtain a processing result of the target feature map, wherein
the neural network model comprises P dynamic stride modules, and in a process of invoking the neural network model to process the target feature map, a stride of any dynamic stride module of the P dynamic stride modules is a target stride corresponding to the any dynamic stride module in the P target strides.

9. The apparatus according to claim 8, wherein the target feature map is a feature map obtained by decoding a bitstream.

10. The apparatus according to claim 8 or 9, wherein the dynamic stride module is a dynamic stride convolutional layer or a dynamic stride residual block.

11. The apparatus according to any one of claims 8 to 10, wherein the processing unit is further configured to:
determine the preset correspondence between the stride and the feature map size range, wherein the preset correspondence between the stride and the feature map size range comprises a correspondence between N groups of strides and N feature map size ranges, and N is any positive integer;
obtain M groups of sample feature maps, wherein any group of sample feature maps in the M groups of sample feature maps comprises a feature map in any feature map size range of the N feature map size ranges, and M is any positive integer; and
perform multiple times of iterative training on a neural network based on the M groups of sample feature maps to obtain the neural network model, wherein
in a process of training the neural network based on any sample feature map, the stride of the any dynamic stride module of the P dynamic stride modules is a training stride corresponding to the any dynamic stride module in the P training strides, and the P training strides are determined from the N groups of strides based on the correspondences between the N groups of strides and the N feature map size ranges and a size of the any sample feature map.

12. The apparatus according to claim 11, wherein the processing unit is specifically configured to:
S1: perform step S11 to step S13 for a first group of sample feature maps, wherein the first group of sample feature maps is any group of sample feature maps in the M groups of sample feature maps:
S11: inputting a first sample feature map in the first group of sample feature maps into the neural network to obtain a first loss;
S12: if the first loss converges, obtaining the neural network model, or if the first loss does not converge, adjusting a parameter of the neural network based on the first loss, and performing step S13; and
S13: continuing to perform the foregoing steps S11 and S12 by using any second sample feature map that is not used for training in the first group of sample feature maps as the first sample feature map, and if the first loss still does not converge after all sample feature maps in the first group of sample feature maps are used for training, performing step S2; and
S2: continue to perform the foregoing step S1 by using any second group of sample feature maps that is not used for training in the M groups of sample feature maps as the first group of sample feature maps.

13. The apparatus according to claim 11, wherein the processing unit is specifically configured to:
S1: perform step S11 to step S13 for a first group of sample feature maps, wherein the first group of sample feature maps is any group of sample feature maps in the M groups of sample feature maps:
S11: inputting the first group of sample feature maps into the neural network to obtain N first losses, wherein the N first losses correspond to the N feature map size ranges;
S12: obtaining a second loss through calculation based on the N first losses; and
S13: if the second loss converges, obtaining the neural network model, or if the second loss does not converge, adjusting a parameter of the neural network based on the second loss, and performing step S2; and
S2: continue to perform the foregoing step S1 by using any second group of sample feature maps that is not used for training in the M groups of sample feature maps as the first group of sample feature maps.

14. The apparatus according to any one of claims 11 to 13, wherein the any group of sample feature maps in the M groups of sample feature maps comprises N sample feature maps, the N sample feature maps are obtained by encoding N first sample images, the N first sample images are obtained by resizing a second sample image, the N first sample images comprise images in N image size ranges, and the N image size ranges correspond to the N feature map size ranges.

15. An electronic device, comprising:
one or more processors; and
a non-transitory computer-readable storage medium, coupled to the processor and storing a program executed by the processor, wherein when the program is executed by the processor, the electronic device is enabled to perform the method according to any one of claims 1 to 7.

16. A non-transitory computer-readable storage medium, comprising: program code, wherein when the program code is executed by a computer device, the method according to any one of claims 1 to 7 is performed.

17. A chip, comprising: a processor, configured to invoke a computer program from a memory and run the computer program, to enable a device in which the chip is mounted to perform the method according to any one of claims 1 to 7.
